# EUROPEAN PATENT APPLICATION

(11) **EP 4 369 755 A1**
(43) Date of publication of application: **15.05.2024**
(21) Application number: 23762356.6
(22) Date of filing: 29.08.2023
(51) Int. Cl.: H04W 8/18, H04W 48/16, H04L 69/28, H04W 88/06

(54) **ELECTRONIC DEVICE COMPRISING PLURALITY OF SUBSCRIBER IDENTITY MODULES, AND OPERATING METHOD THEREFOR**

(30) Priority: 19.09.2022 KR 20220117605
(71) Applicant: Samsung Electronics Co., Ltd., Suwon-si, Gyeonggi-do 16677 (KR)
(72) Inventor: SONG, Injae, Suwon-si, Gyeonggi-do 16677 (KR); KIM, Dongho, Suwon-si, Gyeonggi-do 16677 (KR); LEE, Soomin, Suwon-si, Gyeonggi-do 16677 (KR); KANG, Yoonjeong, Suwon-si, Gyeonggi-do 16677 (KR)
(74) Representative: Gulde & Partner
(86) International application number: PCT/KR2023/012765
(87) International publication number: WO 2024/063361

(57) **Abstract**

Various embodiments of the disclosure relate to an apparatus and a method for performing a network search in an electronic device. An electronic device includes a first subscriber identity module, a second subscriber identity module, a communication circuit, and a processor, a first protocol stack may perform a network search based on the first subscriber identity information through the communication circuit and transmit indication information associated with a network search to the second protocol stack, and a second protocol stack may, in a case of receiving the indication information associated with a network search from the first protocol stack, configure at least one of a network search range or a priority of a frequency band based on a result of the network search based on the first subscriber identity information, and perform a network search based on the second subscriber identity information, based on at least one of the network search range or the priority of the frequency band. Other embodiments may also be possible.

## Description

### [Technical Field]

Various embodiments of the disclosure relate to an apparatus and a method for performing a network search in an electronic device including a plurality of subscriber identity modules (SIMs).

### [Background Art]

An electronic device may include a subscriber identity module (SIM) that manages personal information to provide various functions to a user, such as communication functions, user authentication, billing, and security functions.

In case that the electronic device includes a plurality of subscriber identity modules, the electronic device may provide communication functions based on subscriber identity information stored in each subscriber identity module. For example, the electronic device may provide a communication function with a first wireless network based on first subscriber identity information stored in a first subscriber identity module and a communication function with a second wireless network based on second subscriber identity information stored in a second subscriber identity module.

### [Disclosure of Invention]

### [Technical Problem]

In case that an electronic device includes a plurality of subscriber identity modules, the electronic device may independently perform wireless communication based on subscriber identity information stored in each subscriber identity module. For example, the electronic device may perform a procedure of registration to a network detected through network search for a first subscriber identity module. The electronic device may perform a procedure of registration to a network detected through network search for a second subscriber identity module separately from the first subscriber identity module.

Since the electronic device performs network search independently for each subscriber identity module, the electronic device may perform redundant searching of frequency bands (or frequencies) supported in common by the subscriber identity modules.

Various embodiments of the disclosure provide an apparatus and a method for performing a network search in an electronic device for supporting a plurality of subscriber identity modules.

The technical problems to be solved herein are not limited to those mentioned above, and other technical problems not mentioned may be clearly understood by those skilled in the art from the description below.

### [Solution to Problem]

According to various embodiments, an electronic device may include a memory, a first subscriber identity module configured to store first subscriber identity information, a second subscriber identity module configured to store second subscriber identity information, a communication circuit configured to perform communication with a network based on the first subscriber identity information and/or the second subscriber identity information, and a processor operatively connected to the memory, the first subscriber identity module, the second subscriber identity module, and the communication circuit, and including a first protocol stack configured to process communication with a network based on the first subscriber identity information and a second protocol stack configured to process communication with a network based on the second subscriber identity information. According to an embodiment, the first protocol stack may be configured to perform, through the communication circuit, a network search based on the first subscriber identity information, store a result of the network search based on the first subscriber identity information in the memory, and transmit indication information associated with a network search to the second protocol stack. According to an embodiment, the second protocol stack may be configured to identify the result of network search based on the first subscriber identity information from the memory, based on reception of the indication information associated with a network search from the first protocol stack, configure at least one of a network search range or a priority of a frequency band for performing a network search, based on the result of the network search based on the first subscriber identity information, and perform a network search based on the second subscriber identity information, based on at least one of the network search range or the priority of the frequency band.

A method for operating an electronic device including a first subscriber identity module configured to store first subscriber identity information and a second subscriber identity module configured to store second subscriber identity information according to various embodiments may include, through a first protocol stack configured to process communication with a network based on the first subscriber identity information, performing a network search based on the first subscriber identity information, storing a result of the network search based on the first subscriber identity information in a memory of the electronic device, and transmitting indication information associated with a network search to the second protocol stack. A method for operating an electronic device may include, through a second protocol stack configured to process communication with a network based on the second subscriber identity information, identifying the result of network search based on the first subscriber identity information from the memory, based on reception of the indication information associated with a network search from the first protocol stack, configuring at least one of a network search range or a priority of a frequency band for performing a network search, based on the result of the network search based on the first subscriber identity information, and performing a network search based on the second subscriber identity information, based on at least one of the network search range or the priority of the frequency band.

According to various embodiments, a non-transitory computer-readable storage medium (or a computer program product) storing one or more programs may be disclosed. According to an embodiment, the one or more programs may include instructions which, when executed by a processor of an electronic device, cause the processor to, through a first protocol stack configured to process communication with a network based on the first subscriber identity information, perform a network search based on the first subscriber identity information, store a result of the network search based on the first subscriber identity information in a memory of the electronic device, and transmit indication information associated with a network search to the second protocol stack, and cause the processor to, through a second protocol stack configured to process communication with a network based on the second subscriber identity information, identify the result of network search based on the first subscriber identity information from the memory, based on reception of the indication information associated with a network search from the first protocol stack, configure at least one of a network search range or a priority of a frequency band for performing a network search, based on the result of the network search based on the first subscriber identity information, and perform a network search based on the second subscriber identity information, based on at least one of the network search range or the priority of the frequency band.

### [Advantageous Effects of Invention]

According to various embodiments of the disclosure, an electronic device may update a network search range and/or a priority of a frequency band (or frequencies) for a second subscriber identity module based on a result of network search for a first subscriber identity module, thereby reducing unnecessary network searching so as to reduce the time and power consumed for network searching.

The effects that may be achieved through various embodiments of the disclosure are not limited to those mentioned above, and other effects not mentioned will be apparent to those skilled in the art to which the various embodiments of the disclosure belong from the following description.

### [Brief Description of Drawings]

FIG. 1 is a block diagram of an electronic device in a network environment according to various embodiments;
FIG. 2 is a block diagram of an electronic device for supporting legacy network communication and 5G network communication according to various embodiments;
FIG. 3 illustrates a protocol stack structure of a network of 4G communication and/or 5G communication according to various embodiments;
FIG. 4 is a block diagram of an electronic device for supporting a plurality of subscriber identity modules according to various embodiments;
FIG. 5 is a flow diagram for performing a network search for a subscriber identity module in an electronic device according to various embodiments;
FIG. 6 is a flow diagram for performing a network search for a plurality of subscriber identity modules in an electronic device according to various embodiments;
FIG. 7 illustrates an example of performing a network search for a plurality of subscriber identity modules in an electronic device according to various embodiments;
FIG. 8 illustrates an example of performing a network search for a plurality of subscriber identity modules in a service limited state in an electronic device according to various embodiments;
FIG. 9 illustrates an example of performing a network search for a plurality of active subscriber identity modules in an electronic device according to various embodiments;
FIG. 10 is a flowchart illustrating performing a network search based on indication information associated with a network search in an electronic device according to various embodiments;
FIG. 11 illustrates an example in which a plurality of subscriber identity modules in a service limited state share a timer in an electronic device according to various embodiments;
FIG. 12 illustrates an example of performing a network search for a plurality of subscriber identity modules for sharing a timer in an electronic device according to various embodiments;
FIG. 13 illustrates an example for performing a network search based on indication information associated with a network search in an electronic device according to various embodiments; and
FIG. 14 illustrates an example for performing a network search based on a run time of a timer in an electronic device according to various embodiments.

### [Mode for the Invention]

The following embodiments will be described in more detail with reference to the accompanying drawings.

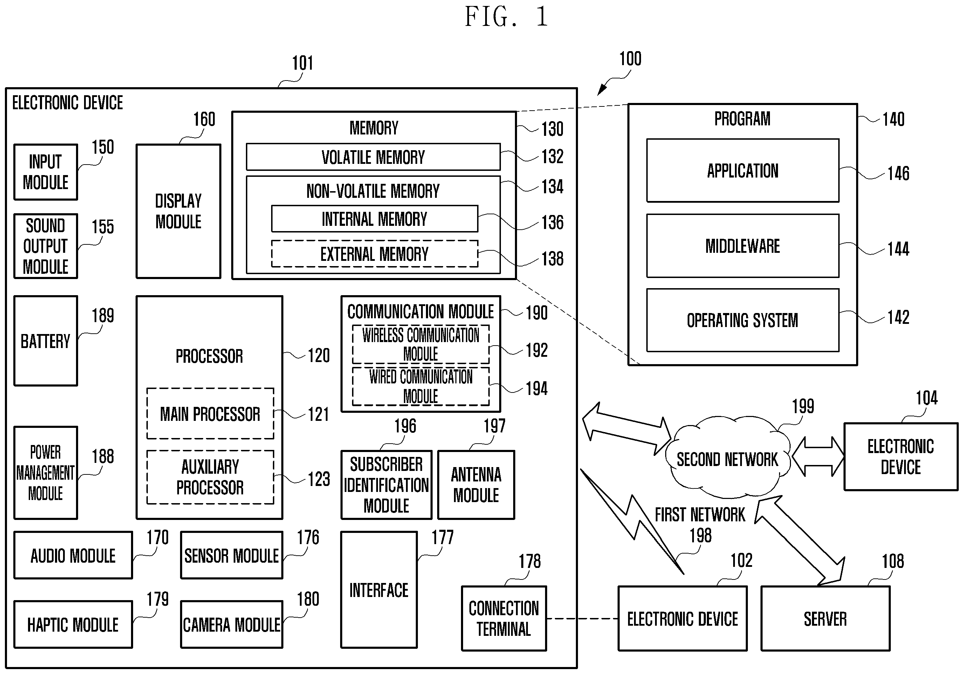

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

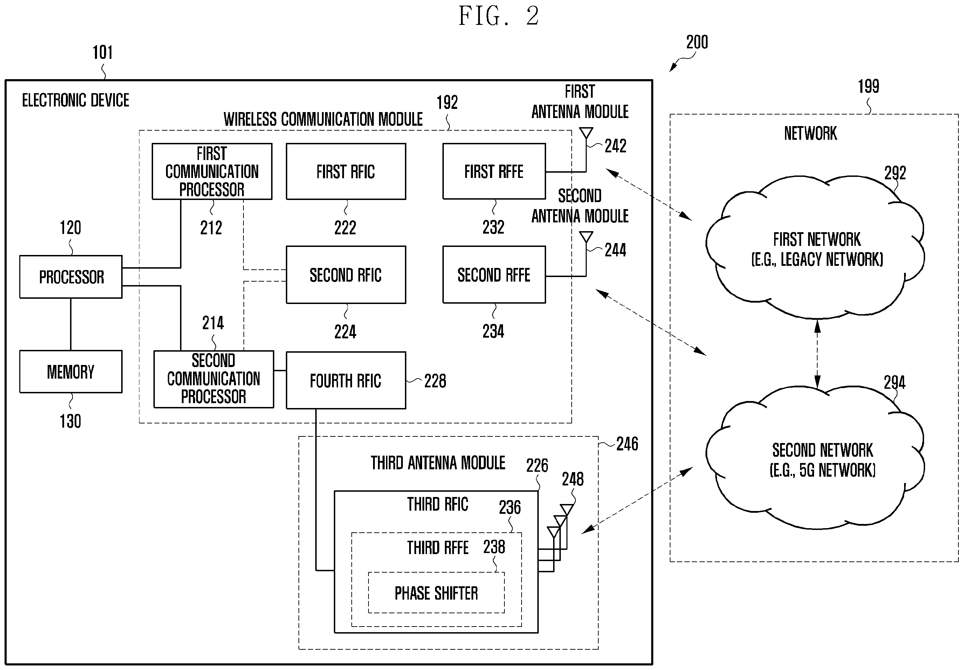

FIG. 2 is a block diagram 200 illustrating an example electronic device 101 supporting legacy network communication and 5G network communication according to various embodiments.

Referring to FIG. 2, according to various embodiments, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may include the processor 120 and the memory 130. The network 199 may include a first network 292 and a second network 294. According to an embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to an embodiment, the fourth RFIC 228 may be omitted, or may be included as a part of the third RFIC 226.

The first communication processor 212 may establish a communication channel of a band to be used for wireless communication with the first network 292, and may support legacy network communication via the established communication channel. According to an embodiment, the first network may be a legacy network including second generation (2G), third generation (3G), fourth generation (4G), or long-term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established communication channel. According to an embodiment, the second network 294 may be a 5G network (e.g., new radio (NR)) defined in 3GPP. In addition, according to an embodiment, the first communication processor 212 or the second communication processor 214 may establish a communication channel corresponding to another designated band (e.g., approximately 6 GHz or less) among bands to be used for wireless communication with the second network 294, and may support 5G network communication via the established communication channel. According to an embodiment, the first communication processor 212 and the second communication processor 214 may be implemented in a single chip or a single package. According to an embodiment, the first communication processor 212 or the second communication processor 214 may be implemented in a single chip or a single package, together with the processor 120, the sub-processor 123, or the communication module 190.

According to an embodiment, the first communication processor 212 may perform data transmission or reception with the second communication processor 214. For example, data which has been classified to be transmitted via the second network 294 may be changed to be transmitted via the first network 292.

In this instance, the first communication processor 212 may receive transmission data from the second communication processor 214. For example, the first communication processor 212 may perform data transmission or reception with the second communication processor 214 via an inter-processor interface. The inter-processor interface may be implemented as, for example, a universal asynchronous receiver/transmitter (UART) (e.g., a high speed-UART (HS-UART)) or a peripheral component interconnect bus express (PCIe), but the type of interface is not limited thereto. For example, the first communication processor 212 and the second communication processor 214 may exchange control information and packet data information using, for example, a shared memory. For example, the first communication processor 212 may perform transmission or reception of various types of information such as sensing information, information associated with an output strength, and resource block (RB) allocation information, with the second communication processor 214.

Depending on implementation, the first communication processor 212 may not be directly connected to the second communication processor 214. In this instance, the first communication processor 212 may perform data transmission or reception with the second communication processor 214, via the processor 120 (e.g., an application processor). For example, the first communication processor 212 and the second communication processor 214 may perform data transmission or reception via the processor 120 (e.g., an application processor) and a HS-UART interface or a PCIe interface, but the type of interface is not limited. For example, the first communication processor 212 and the second communication processor 214 may exchange control information and packet data information using the processor 120 (e.g., an application processor) and a shared memory. According to an embodiment, the first communication processor 212 and the second communication processor 214 may be implemented in a single chip or a single package. According to various embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in the range of approximately 700 MHz to 3 GHz, which is used in the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal into a baseband signal so that the baseband signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) in an Sub6 band (e.g., approximately 6 GHz or less) used in the second network 294 (e.g., a 5G network). In the case of reception, a 5G Sub6 RF signal may be obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the signal may be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used in the second network 294 (e.g., a 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal into a baseband signal so that the signal is processed by the second communication processor 214. According to an embodiment, the third RFFE 236 may be implemented as a part of the third RFIC 226.

According to an embodiment, the electronic device 101 may include the fourth RFIC 228, separately from or, as a part of, the third RFIC 226. In this instance, the fourth RFIC 228 may convert a baseband signal produced by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal into a 5G Above6 RF signal. In the case of reception, a 5G Above6 RF signal may be received from the second network 294 (e.g., a 5G network) via an antenna (e.g., the antenna 248), and may be converted into an IF signal by the third RFIC 226. The fourth RFIC 228 may convert the IF signal into a baseband signal so that the second communication processor 214 is capable of processing the baseband signal.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or single package. According to an embodiment, at least one of the first antenna module 242 or the second antenna module 244 may be omitted or may be combined with another antenna module, to process RF signals of a plurality of corresponding bands.

According to an embodiment, the third RFIC 226 and the antenna 248 may be disposed in the same substrate, and may form a third antenna module 246. For example, the wireless communication module 192 or the processor 120 may be disposed in a first substrate (e.g., a main PCB). In this instance, the third RFIC 226 is disposed in a part (e.g., a lower part) of a second substrate (e.g., a sub PCB) different from the first substrate, and the antenna 248 is disposed in another part (e.g., an upper part), so that the third antenna module 246 may be formed. By disposing the third RFIC 226 and the antenna 248 in the same substrate, the length of a transmission line therebetween may be reduced. For example, this may reduce a loss (e.g., a diminution) of a high-frequency band signal (e.g., approximately 6 GHz to 60 GHz) used for 5G network communication, the loss being caused by a transmission line. Accordingly, the electronic device 101 may improve the quality or speed of communication with the second network 294 (e.g., a 5G network).

According to an embodiment, the antenna 248 may be implemented as an antenna array including a plurality of antenna elements which may be used for beamforming. In this instance, the third RFIC 226, for example, may include a plurality of phase shifters 238 corresponding to a plurality of antenna elements, as a part of the third RFFE 236. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second network 294 (e.g., a 5G network) may operate independently (e.g., Standalone (SA)) from the first network 292 (e.g., a legacy network), or may operate by being connected thereto (e.g., Non-Standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

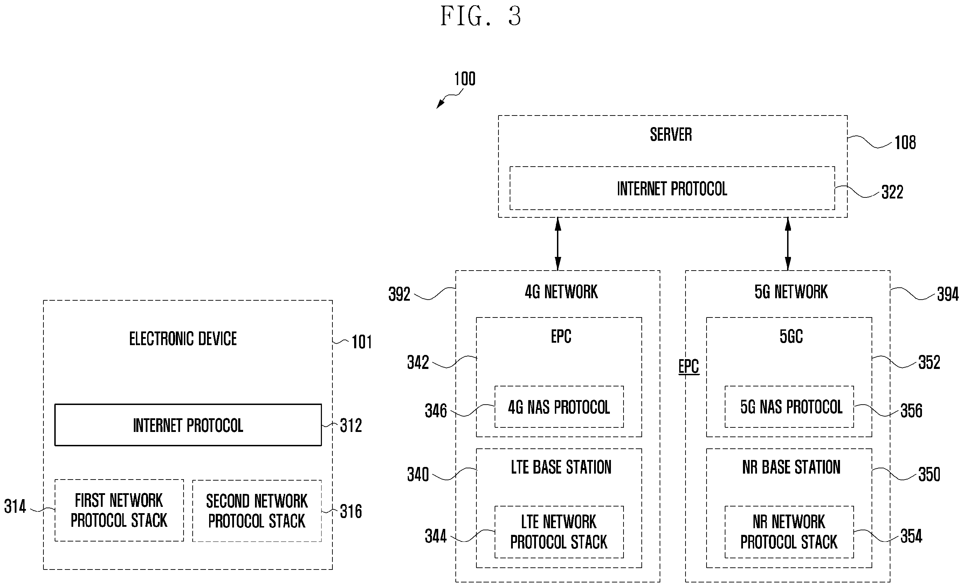

FIG. 3 is a diagram illustrating a protocol stack structure of a network 100 of 4G communication and/or 5G communication, according to various embodiments.

According to various embodiments referring to FIG. 3, the network 100 may include an electronic device 101, a 4G network 392, a 5G network 394 and a server 108.

According to various embodiments, the electronic device 101 may include an Internet protocol 312, a first protocol stack 314, and a second protocol stack 316. For example, the electronic device 101 may communicate with the server 108 through the 4G network 392 and/or the 5G network 394. According to an embodiment, the electronic device 101 may perform Internet communication related to the server 108 by using the Internet protocol 312 (e.g., a transmission control protocol (TCP), a user datagram protocol (UDP), or an Internet protocol (IP)). For example, the Internet protocol 312 may be executed in a main processor (e.g., the main processor 121 of FIG. 1) included in the electronic device 101.

According to various embodiments, the electronic device 101 may include a plurality of subscriber identity modules (e.g., a first subscriber identity module and a second subscriber identity module). According to an embodiment, the electronic device 101 may communicate with the 4G network 392 and/or the 5G network 394, based on subscriber identity information (e.g., international mobile subscriber identity (IMSI)) stored in each of the plurality of subscriber identity modules (e.g., the first subscriber identity module and the second subscriber identity module).

According to various embodiments, the electronic device 101 may perform wireless communication for the first subscriber identity module by using the first protocol stack 314. According to an embodiment, the first protocol stack 314 may include a first sub-protocol stack and a second sub-protocol stack. For example, the first sub-protocol stack may include various protocols for wireless communication with the 4G network 392. For example, the second sub-protocol stack may include various protocols for wireless communication with the 5G network 394. According to an embodiment, when performing communication by using the first subscriber identity module, the electronic device 101 may perform wireless communication with the 4G network 392 and/or the 5G network 394 by using the first protocol stack 314. For example, the electronic device 101 may perform wireless communication with the 4G network 392 by using the first sub-protocol stack of the first protocol stack 314, or perform wireless communication with the 5G network 394 by using the second sub-protocol stack of the first protocol stack 314.

According to various embodiments, the electronic device 101 may perform wireless communication for the second subscriber identity module by using the second protocol stack 316. According to an embodiment, the second protocol stack 316 may include a third sub-protocol stack and a fourth sub-protocol stack. For example, the third sub-protocol stack may include various protocols for wireless communication with the 4G network 392. For example, the fourth sub-protocol stack may include various protocols for wireless communication with the 5G network 394. According to an embodiment, when performing communication by using the second subscriber identity module, the electronic device 101 may perform wireless communication with the 4G network 392 and/or the 5G network 394 by using the second protocol stack 316. For example, the electronic device 101 may perform wireless communication with the 4G network 392 by using the third sub-protocol stack of the second protocol stack 316, or perform wireless communication with the 5G network 394 by using the fourth sub-protocol stack of the second protocol stack 316.

According to various embodiments, the first protocol stack 314 and the second protocol stack 316 may be executed in one or more communication processors (e.g., the wireless communication module 192 of FIG. 1) included in the electronic device 101.

According to various embodiments, the server 108 may include an Internet Protocol 322. The server 108 may transmit and receive data related to the Internet protocol 322 to and from the electronic device 101 through the 4G network 392 and/or the 5G network 394. According to an embodiment, the server 108 may include a cloud computing server that exists outside of the 4G network 392 or the 5G network 394. According to another embodiment, the server 108 may include an edge computing server (or a mobile edge computing (MEC) server) located inside at least one of the 4G network 392 or the 5G network 394.

According to various embodiments, the 4G network 392 may include a long-term evolution (LTE) base station 340 and an evolved packed core (EPC) 342. The LTE base station 340 may include an LTE protocol stack 344. The EPC 342 may include a 4G non-access stratum (NAS) protocol 346. The 4G network 392 may perform LTE wireless communication with the electronic device 101 by using the LTE protocol stack 344 and the 4G NAS protocol 346.

According to various embodiments, the 5G network 394 may include a new radio (NR) base station 350 and a 5th generation core (5GC) 352. The NR base station 350 may include an NR protocol stack 354. The 5GC 352 may include a 5G NAS protocol 356. The 5G network 394 may perform NR wireless communication with the electronic device 101 by using the NR protocol stack 354 and the 5G NAS protocol 356.

According to an embodiment, the first protocol stack 314, the second protocol stack 316, the LTE protocol stack 344, and the NR protocol stack 354 may include a control plane protocol for transmitting and receiving a control message and a user plane protocol for transmitting and receiving user data. For example, the control message may include a message related to at least one of security control, bearer setup, authentication, registration, or mobility management. For example, the user data may include data excluding control messages.

According to an embodiment, the control plane protocol and the user plane protocol may include physical (PHY), medium access control (MAC), radio link control (RLC), or packet data convergence protocol (PDCP) layers. For example, the PHY layer may channel-code and modulate data received from a higher layer (e.g., MAC layer) and transmit the data through a radio channel, demodulate and decode data received through the radio channel, and transmit the data to the higher layer. The PHY layer included in the first protocol stack 314 (e.g., the second sub-protocol stack), the second protocol stack 316 (e.g., the fourth sub-protocol stack), and the NR protocol stack 354 may further perform an operation related to beam forming. For example, the MAC layer may logically/physically map data to a radio channel to be transmitted/received, and perform hybrid automatic repeat request (HARQ) for error correction. For example, the RLC layer may perform concatenation, segmentation, or reassembly of data, and order check, rearrangement, or redundancy check of data. For example, the PDCP layer may perform operations related to ciphering and data integrity of control data and user data. The first protocol stack 314 (e.g., the second sub-protocol stack), the second protocol stack 316 (e.g., the fourth sub-protocol stack), and the NR protocol stack 354 may further include a service data adaptation protocol (SDAP). For example, the SDAP may manage radio bearer assignment based on quality of service (QoS) of user data.

According to various embodiments, the control plane protocol may include a radio resource control (RRC) layer and a non-access stratum (NAS) layer. For example, the RRC layer may process radio bearer configuration, paging, or control data related to mobility management. For example, the NAS may process control messages related to authentication, registration, and mobility management.

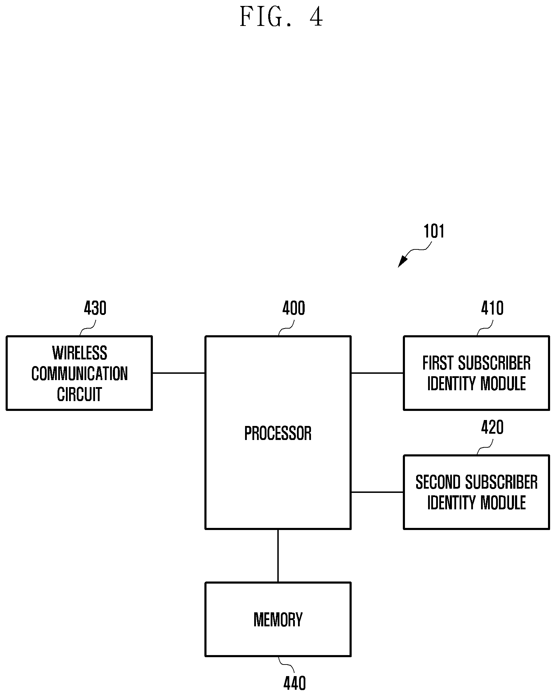

FIG. 4 is a block diagram of an electronic device for supporting a plurality of subscriber identity modules according to various embodiments. According to an embodiment, an electronic device 101 of FIG. 4 may be at least partially similar to the electronic device 101 of FIGS. 1, 2, or 3, or may further include other embodiments of the electronic device. In an example, the electronic device 101 includes a first subscriber identity module 410 and a second subscriber identity module 420, but is not limited thereto.

Referring to FIG. 4, according to various embodiments, the electronic device 101 may include a processor 400, a first subscriber identity module (SIM) 410, a second subscriber identity module 420, a communication circuit 430, and/or a memory 440. According to an embodiment, the processor 400 may be substantially the same as the processor 120 of FIG. 1, or may be included in the processor 120. The first subscriber identity module 410 and the second subscriber identity module 420 may be substantially the same as the subscriber identity module 196 of FIG. 1, or may be included in the subscriber identity module 196. The communication circuit 430 may be substantially the same as the wireless communication module 192 of FIG. 1, or may be included in the wireless communication module 192. The memory 440 may be substantially the same as the memory 130 of FIG. 1, or may be included in the memory 130.

According to various embodiments, the processor 400 may control the first subscriber identity module 410, the second subscriber identity module 420, the communication circuit 430, and/or the memory 440 to which the processor is operatively, functionally, and/or electrically connected. According to an embodiment, the processor 400 may include an application processor (AP) (e.g., the main processor 121 of FIG. 1) and/or a communication processor (CP) (e.g., the co-processor 123 of FIG. 1 or the communication module 190 of FIG. 1). According to an embodiment, the communication processor may include a first processing part and a second processing part. For example, the first processing part may perform communication with a first node (e.g., a base station or a transmission node) of a first wireless network (e.g., a new radio (NR) network). In an example, the first processing part may transmit and/or receive control messages and/or data to and/or from the first node through the first wireless network. For example, the second processing part may perform wireless communication with a second node (e.g., a base station or a transmission node) of a second wireless network (e.g., a long term evolution (LTE) network). In an example, the second processing part may transmit and/or receive control messages and/or data to and/or from the second node through the second wireless network. For example, the first processing part and the second processing part may include software for processing signals and protocols of different frequency bands. For example, the first processing part and the second processing part may include different circuits or different hardware. For example, the first processing part and the second processing part may be logically (e.g., software) separated parts.

According to various embodiments, the first subscriber identity module 410 and/or the second subscriber identity module 430 may store subscriber identity information (e.g., international mobile subscriber identity (IMSI)) for access, authentication, billing, and/or security of a wireless network. According to an embodiment, the first subscriber identity module 410 may store first subscriber identity information to be used by the electronic device 101 to access the network of a first communication service provider. According to an embodiment, the second subscriber identity module 420 may store second subscriber identity information to be used by the electronic device 101 to access the network of a second communication service provider. In an example, the first communication service provider and the second communication service provider may include the same communication service provider or different communication service providers.

According to various embodiments, the first subscriber identity module 410 and/or the second subscriber identity module 430 may be configured in the form of an integrated circuit (IC) card, and mounted in a slot of the electronic device 101. According to various embodiments, the first subscriber identity module 410 and/or the second subscriber identity module 430 may be configured in the form of an embedded SIM (eSIM) (or embedded universal integrated circuit card (eUICC)) that is directly embedded in the electronic device 101. For example, in case that the first subscriber identity module 410 and/or the second subscriber identity module 430 are configured in the form of the eSIM, the electronic device 101 may store information associated with the first subscriber identity module 410 and/or the second subscriber identity module 430 via remote SIM provisioning on a secure chip disposed on a circuit board of the electronic device 101 during the manufacturing process of the electronic device 101.

According to various embodiments, the processor 400 may control the communication circuit 430 to perform communication with a wireless network based on the first subscriber identity information stored in the first subscriber identity module 410 and/or the second subscriber identity information stored in the second subscriber identity module 430. According to an embodiment, the processor 400 may control the communication circuit 430 to perform wireless communication based on the first subscriber identity information stored in the first subscriber identity module 410, through a first protocol stack (e.g., the first protocol stack 314 of FIG. 3). In an example, the first protocol stack is a communication function that supports wireless communication associated with the first subscriber identity module 410, and may be executed by the processor 400 (e.g., CP) for wireless communication based on the first subscriber identity information. According to an embodiment, the processor 400 may control the communication circuit 430 to perform wireless communication based on the second subscriber identity information stored in second subscriber identity module 420, via a second protocol stack (e.g., the second protocol stack 316 in FIG. 3). In an example, the second protocol stack is a communication function that supports wireless communication associated with the second subscriber identity module 420, and may be executed by the processor 400 (e.g., CP) for wireless communication based on the second subscriber identity information.

According to various embodiments, the processor 400 (e.g., the first protocol stack) may perform a network search based on the first subscriber identity information of the first subscriber identity module 410. According to an embodiment, in case that a communication service based on the first subscriber identity information is in a limited state (e.g., a limited service) or that the communication service based on the first subscriber identity information is unable to be provided (e.g., no service), the processor 400 (e.g., the first protocol stack) may determine to perform the network search based on the first subscriber identity information. According to an embodiment, when the network search is determined to be performed, the processor 400 (e.g., the first protocol stack) may identify whether available information related to the network search stored in the memory 440 exists. In case that available information related to the network search does not exist, the processor 400 (e.g., the first protocol stack) may control the communication circuit 430 to perform a network search for frequency bands supported by the first protocol stack. In an example, the available information related to the network search may include information related to a result of network search based on another subscriber identity information (e.g., the second subscriber identity information) obtained (or stored) within a designated reference time.

According to an embodiment, when it is determined to perform a network search, the processor 400 (e.g., the first protocol stack) may identify whether another protocol stack (e.g., the second protocol stack) exists that is performing a network search or waiting to perform a network search. In case that another protocol stack (e.g., the second protocol stack) that is performing a network search or is to perform a network search does not exist, the processor 400 may control the communication circuit 430 to perform a network search for the frequency bands supported by the first protocol stack. For example, the network search for the frequency bands may be performed based on the expiration of a timer for configuring a time point at which a network search is performed. In an example, the timer may be run (or reset) based on a determination to perform the network search. In an example, the information related to the other protocol stack (e.g., the second protocol stack) performing the network search or waiting to perform the network search may be obtained from the other protocol stack (e.g., the second protocol stack) or a separate control module (e.g., a search control module). In an example, the state of waiting to perform the network search may include a state in which a timer for the network search is running.

According to an embodiment, the processor 400 (e.g., the first protocol stack) may share the result of the network search with another protocol stack (e.g., the second protocol stack). For example, the network search result may be stored in the memory 440 (e.g., a shared memory). For example, the network search result may be transmitted to another protocol stack (e.g., a second protocol stack). By sharing network search results, protocol stacks (e.g., the first protocol stack and/or the second protocol stack) may avoid redundant searching of frequency bands (or frequencies).

According to various embodiments, the processor 400 (e.g., the second protocol stack) may perform a network search based on second subscriber identity information of the second subscriber identity module 420. According to an embodiment, the processor 400 (e.g., the second protocol stack) may determine to perform the network search based on the second subscriber identity information in case that the communication service based on the second subscriber identity information is in a limited state (e.g., limited service) or that the communication service based on the second subscriber identity information is unable to be provided (e.g., no service).

According to an embodiment, when the network search is determined to be performed, the processor 400 (e.g., the second protocol stack) may identify whether available information related to the network search stored in the memory 440 exists. In case that it is determined that the available information associated with the network search exists, the processor 400 (e.g., the second protocol stack) may configure (or update) a range and/or search priority of network search associated with the second subscriber identity information, based on the available information associated with the network search. The aim of the configuration/update of the range is to improve the network search in view of the available information associated with the prior network search. The processor 400 (e.g., the second protocol stack) may control the communication circuit 430 to perform the network search based on the network search range and/or search priority. In an example, the available information associated with the network search may include information associated with a result of network search based on another subscriber identity information (e.g., the first subscriber identity information) obtained (or stored) within a designated reference time.

For example, the processor 400 (e.g., the second protocol stack) may configure (or update) a range of network search associated with the second subscriber identity information by removing at least one frequency band among frequency bands supported by the second protocol stack based on a result of network search from another protocol stack (e.g., the first protocol stack). In an example, the configuring (or updating) of the network search range associated with the second subscriber identity information may include removing a frequency band, in which no signal (or energy) is detected through the network search of the first protocol stack, among frequency bands supported by the first protocol stack and the second protocol stack. In an example, a state in which no signal (or energy) is detected may include a state in which no signal (or energy) is detected through search of the frequency band, or only signal (or energy) having a designated reference strength or less is detected.

For example, the processor 400 (e.g., the second protocol stack) may configure a search priority for frequency bands supported by the second protocol stack based on a result of network search of another protocol stack (e.g., the first protocol stack). In an example, the configuring (or updating) of the search priority of the frequency bands supported by the second protocol stack may include a series of operation of configuring a relatively high search priority for at least one frequency band, in which a signal (or energy) has been detected through network search of the first protocol stack, among the frequency bands supported by the second protocol stack. As a result, the network search of another protocol stack may be performed faster. In an example, the at least one frequency band, in which a signal (or energy) is detected through network search of the first protocol stack, among the frequency bands supported by the second protocol stack, may be configured to have a relatively higher search priority as a received signal strength is relatively higher. In an example, a frequency band in which a signal (or energy) is detected may include a frequency band in which a signal (or energy) having the strength exceeding a designated reference strength has been detected.

According to an embodiment, in case that network search is determined to be performed, the processor 400 (e.g., the second protocol stack) may identify whether another protocol stack (e.g., the first protocol stack) that is performing a network search or is to perform a network search exists. For example, the processor 400 (e.g., the second protocol stack) may obtain, from the other protocol stack (e.g., the first protocol stack), information regarding the state of the other protocol stack (e.g., the first protocol stack) performing a network search or waiting to perform a network search. For example, the processor 400 (e.g., the second protocol stack) may obtain, from a separate control module (e.g., the search control module), information regarding the state of the other protocol stack (e.g., the first protocol stack) performing a network search or waiting to perform a network search.

According to an embodiment, when it is determined that another protocol stack (e.g., the first protocol stack) that is performing a network search or waiting to perform a network search exists, the processor 400 (e.g., the second protocol stack) may identify whether indication information associated with the network search is received from the other protocol stack (e.g., the first protocol stack).

For example, in case that indication information associated with a network search is received, the processor 400 (e.g., the second protocol stack) may configure (or update) a range and/or search priority of network search associated with the second subscriber identity information, based on a result of network search of another protocol stack (e.g., the first protocol stack). The processor 400 (e.g., the second protocol stack) may control the communication circuit 430 to perform a network search based on the network search range and/or search priority. In an example, the network search associated with the second subscriber identity information may be performed based on the reception of indication information associated with the network search, regardless of an expiration time point of a timer for configuring a time point of the network search associated with the second subscriber identity information.

For example, the processor 400 (e.g., the second protocol stack) may, in a case of reception of the indication information associated with a network search, identify the running state of the timer for configuring a time point of the network search associated with the second subscriber identity information. In case that the timer has expired, the processor 400 (e.g., the second protocol stack) may configure (or update) a range and/or search priority of network search associated with the second subscriber identity information based on the a result of network search of the other protocol stack (e.g., the first protocol stack). The processor 400 (e.g., the second protocol stack) may control the communication circuit 430 to perform a network search based on the network search range and/or search priority.

For example, while no indication information associated with the network search has been received, in case that the running of the timer for configuring a time point of the network search associated with the second subscriber identity information has expired, the processor 400 (e.g., the second protocol stack) may control the communication circuit 430 to perform a network search for frequency bands supported by the second protocol stack.

According to an embodiment, the processor 400 (e.g., the second protocol stack) may share the network search result with the other protocol stack (e.g., the first protocol stack). For example, the network search result may be stored in the memory 440 (e.g., a shared memory). For example, the network search result may be transmitted to another protocol stack (e.g., the first protocol stack). In an example, the network search result may be transmitted to another protocol stack (e.g., the first protocol stack) through indication information associated with the network search.

According to various embodiments, when it is determined that the first protocol stack and the second protocol stack are performing the network search, the processor 400 may identify a protocol stack to preferentially perform the network search. According to an embodiment, in case that a public timer for determining a time point of a network search is running, the processor 400 (e.g., the second protocol stack) may determine that there is another protocol stack (e.g., the first protocol stack) waiting to perform the network search. The processor 400 (e.g., the second protocol stack) may determine to select a protocol stack to preferentially perform the network search based on the presence of the other protocol stack (e.g., the first protocol stack) waiting to perform the network search. According to an embodiment, the protocol stack for preferentially performing the network search may be selected based on at least one of a dedicated data slot, a priority of a communication network (e.g., radio access technology (RAT)) supported by a protocol stack, the number of frequency bands supported by a protocol stack, or a time point at which the network search is determined to be performed. In this manner it may be flexibly controlled, which protocol stack is to execute the network search first. For example, a protocol stack that is configured based on a dedicated data slot among the first protocol stack and the second protocol stack may be selected as the protocol stack for preferentially performing a network search. In an example, the determining of the protocol stack to preferentially perform a network search may be determined through consultation of the first protocol stack and the second protocol stack. In an example, the determining of the protocol stack to preferentially perform a network search may be determined by a separate control module (e.g., a search control module). In an example, the public timer may include a timer used in common by the first protocol stack and the second protocol stack to determine a time point of the network search.

According to various embodiments, the processor 400 (e.g., the first protocol stack and/or second protocol stack) may control the communication circuit 430 to perform a registration procedure with a public land mobile network (PLMN) detected through network search.

According to various embodiments, the communication circuit 430 may transmit and/or receive signals and/or data to and/or from an external device (e.g., the electronic device 102 or 104, or server 108 of FIG. 1) via an antenna (not shown). According to an embodiment, the communication circuit 430 may include RFICs (e.g., the first RFIC 222, second RFIC 224, and/or third RFIC 226 of FIG. 2) and RFFEs (e.g., the first RFFE 232, second RFFE 234, and/or third RFFE 236 of FIG. 2) for communication with an external device.

According to various embodiments, the memory 440 may at least temporarily store various data used by at least one element of the electronic device 101 (e.g., the processor 400 or communication circuit 430). For example, the data may include a result of network search (e.g., available information related to network search). According to an embodiment, the memory 440 may store various instructions that may be executed by the processor 400.

According to various embodiments, an electronic device (e.g., the electronic device 101 of FIG. 1, FIG. 2, FIG. 3, or FIG. 4) may include a memory (e.g., the memory 130 of FIG. 1 or the memory 440 of FIG. 4) and a first subscriber identity module (e.g., the first subscriber identity module 410 of FIG. 4) configured to store first subscriber identity information and a second subscriber identity module (e.g., the second subscriber identity module 420 of FIG. 4) configured to store second subscriber identity information, a communication circuit (e.g., the wireless communication module 192 of FIG. 1, or the communication circuit 430 of FIG. 4) configured to perform communication with a network based on the first subscriber identity information and/or the second subscriber identity information, and a processor (e.g., the processor 120 of FIG. 1 or the processor 400 of FIG. 4) operatively connected to the memory, the first subscriber identity module, the second subscriber identity module, and the communication circuit, and including a first protocol stack configured to process communication with a network based on the first subscriber identity information and a second protocol stack configured to process communication with a network based on the second subscriber identity information. According to an embodiment, the first protocol stack may perform, through the communication circuit, a network search based on the first subscriber identity information, store a result of the network search based on the first subscriber identity information in the memory, and transmit indication information associated with a network search to the second protocol stack. According to an embodiment, the second protocol stack may identify the result of network search based on the first subscriber identity information from the memory, based on reception of the indication information associated with a network search from the first protocol stack, configure at least one of a network search range or a priority of a frequency band for performing a network search, based on the result of the network search based on the first subscriber identity information, and perform a network search based on the second subscriber identity information, based on at least one of the network search range or the priority of the frequency band.

According to various embodiments, the second protocol stack may identify a frequency band in which no signal is detected through the network search based on the first subscriber identity information among at least one frequency band supported by the first protocol stack and the second protocol stack, and establish the network search range by removing the frequency band in which no signal has been detected among the at least one frequency band supported by the second protocol stack.

According to various embodiments, the second protocol stack may configure a relatively high priority for a frequency band, in which a signal has been detected through network search based on the first subscriber identity information, among at least one frequency band supported by the second protocol stack.

According to various embodiments, the second protocol stack may, in case that the result of the network search based on the first subscriber identity information is not identified from the memory, perform a network search based on at least one frequency band supported by the second protocol stack.

According to various embodiments, the second protocol stack may identify whether a timer associated with a network search is running, based on a determination that communication with a wireless network based on the second subscriber identity information is unable to be established, and in case that the timer is running, identify whether the indication information associated with the network search is received from the first protocol stack.

According to various embodiments, the second protocol stack may, in case that the timer is running, determine whether to preferentially perform the network search of the second protocol stack, and based on the determination to preferentially perform the network search of the first protocol stack, identify whether the indication information associated with the network search is received from the first protocol stack.

According to various embodiments, the second protocol stack may perform a network search based on at least one frequency band supported by the second protocol stack, based on the determination to preferentially perform the network search of the second protocol stack, store, in the memory, the result of the network search based on the second subscriber identity information, and transmit indication information associated with a network search to the first protocol stack, wherein the first protocol stack may identify, from the memory, the result of the network search based on the second subscriber identity information, based on reception of the indication information associated with a network search from the second protocol stack, configure at least one of a network search range or a priority of a frequency band for performing the network search, based on the result of the network search based on the second subscriber identity information, and perform a network search based on the first subscriber identity information based on at least one of the network search range or the priority of the frequency band.

According to various embodiments, the second protocol stack may determine whether to preferentially perform the network search of the second protocol stack based on at least one of a dedicated data slot, a priority of a communication network (e.g., radio access technology (RAT)) supported by a protocol stack, the number of frequency bands supported by the protocol stack, or a time point at which the network search is determined to be performed.

According to various embodiments, the second protocol stack may run a timer associated with a network search of the second protocol stack based on a determination that communication with a network based on the second subscriber identity information is unable to be established, identify the result of the network search based on the first subscriber identity information in the memory, based on reception of indication information associated with the network search from the first protocol stack, configure at least one of a network search range or a priority of a frequency band for performing the network search, based on the result of the network search based on the first subscriber identity information, and in case that the timer expires, perform the network search based on the second subscriber identity information, based on at least one of the network search range or the priority of frequency band.

According to various embodiments, the first protocol stack may run a timer associated with the network search, based on a determination that communication with the network based on the first subscriber identity information is unable to be established, and in case that the timer expires, perform a network search based on at least one frequency band supported by the first protocol stack.

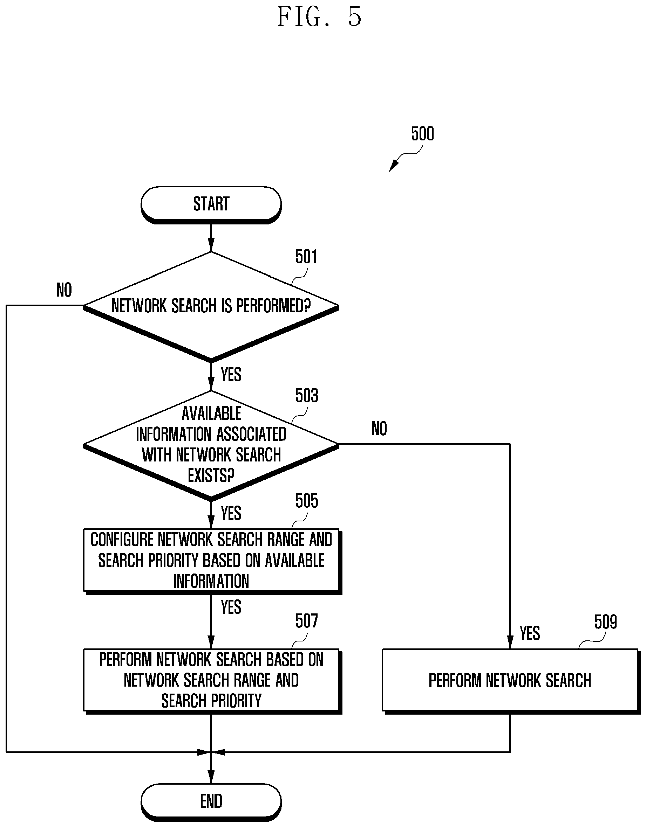

FIG. 5 is a flowchart 500 for performing a network search for a subscriber identity module in an electronic device according to various embodiments. In the following embodiments, each operation may be performed sequentially, but is not required to be performed sequentially. For example, the order of each operation may be changed, and at least two operations may be performed in parallel. In an example, the electronic device of FIG. 5 may correspond to the electronic device 101 of FIG. 1, FIG. 2, FIG. 3, or FIG. 4. Although the flowchart of Fig. 5 comprises conditional branching statements such as steps 501 or 503, it is defined that any of the branches of the flowchart also forms a separate, additional embodiment while one or more feature(s) of such a branch may be considered optional as described below when explaining particular steps of the flowchart.

According to various embodiments referring to FIG. 5, the electronic device (e.g., a first protocol stack or second protocol stack) may determine whether to perform a network search in operation 501. According to an embodiment, in case that a communication service based on second subscriber identity information is in a limited state (e.g., a limited service) or that the communication service based on the second subscriber identity information is unable to be provided (e.g., no service), the processor 400 (e.g., the second protocol stack) may determine to perform a network search based on the second subscriber identity information. Alternatively, step 501 may be defined as non-branching i.e. the 'No' branch may be omitted while the step 501 is defined as determining that the electronic device is to perform a network search.

According to various embodiments, when the network search is determined not to be performed (e.g., "No" in operation 501), the electronic device (e.g., the first protocol stack or second protocol stack) may end the procedure of an embodiment for performing the network search.

According to various embodiments, when the network search is determined to be performed (e.g., "Yes" in operation 501), the electronic device (e.g., the first protocol stack or second protocol stack) may identify whether available information related to the network search stored in the memory 440 exists, in operation 503. In an example, the available information related to the network search may include information related to a result of network search based on another subscriber identity information (e.g., the first subscriber identification) obtained (or stored) within a designated reference time. In an example, the designated reference time may include a reference time configured for identifying whether the information related to the network search result stored in the memory 440 is trustable (or usable).

According to various embodiments, in case that available information related to the network search exists (e.g., "Yes" in operation 503), the electronic device (e.g., the first protocol stack or second protocol stack) may configure a network search range and/or network search priority based on the available information related to the network search in operation 505. According to an embodiment, the processor 400 (e.g., the second protocol stack) may configure (or update) a range of network search associated with the second subscriber identity information by removing at least one frequency band among the frequency bands supported by the second protocol stack based on the result of the network search of the first protocol stack. For example, the configuring (or updating) of the network search range associated with the second subscriber identity information may include a series of operation of removing a frequency band, in which no signal (or energy) is detected through the network search of the first protocol stack, among frequency bands supported by the first protocol stack and the second protocol stack. In an example, a state in which no signal (or energy) is detected may include a state in which no signal (or energy) is detected through search of the frequency band, or only signal (or energy) having a designated reference strength or less is detected.

According to an embodiment, the processor 400 (e.g., the second protocol stack) may configure a search priority for frequency bands supported by the second protocol stack based on a result of network search of the first protocol stack. For example, the configuring (or updating) of the search priority of the frequency bands supported by the second protocol stack may include a series of operation of configuring, as relatively high, the search priority of at least one frequency band, in which a signal (or energy) has been detected through network search of the first protocol stack, among the frequency bands supported by the second protocol stack. In an example, the at least one frequency band, in which a signal (or energy) is detected through network search of the first protocol stack, among the frequency bands supported by the second protocol stack may be configured to have a relatively higher search priority as a received signal strength is relatively higher. In an example, a frequency band in which a signal (or energy) is detected may include a frequency band in which a signal (or energy) having the strength exceeding a designated reference strength has been detected.

According to various embodiments, the electronic device (e.g., the first protocol stack or the second protocol stack) may perform a network search based on a network search range and/or network search priority established based on available information related to the network search, in operation 507. According to an embodiment, the processor 400 (e.g., the second protocol stack) may control the communication circuit 430 to perform search of the at least one frequency band included in the network search range established based on the available information related to the network search. According to an embodiment, the processor 400 (e.g., the second protocol stack) may control the communication circuit 430 to perform search of frequency bands supported by the second protocol stack based on a search priority established based on available information related to the network search. According to an embodiment, the processor 400 (e.g., the second protocol stack) may control the communication circuit 430 to perform search of the at least one frequency band included in the network search range based on a search priority established based on available information related to the network search.

According to various embodiments, in case that available information related to the network search does not exist (e.g., "No" in operation 503), the electronic device (e.g., the first protocol stack or second protocol stack) may perform the network search in operation 509. According to an embodiment, the processor 400 (e.g., the second protocol stack) may control the communication circuit 430 to perform search of frequency bands supported by the second protocol stack. Alternatively, step 509 may be omitted, and step 503 may be non-conditional (non-branching) but rather formulated as determining that available information related to the network search exists.

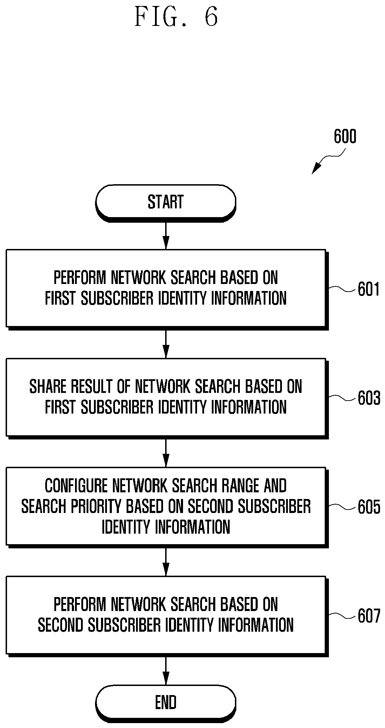

FIG. 6 is a flowchart 600 for performing a network search for a plurality of subscriber identity modules in an electronic device according to various embodiments. In the following embodiments, each operation may be performed sequentially, but is not necessarily performed sequentially. For example, the order of each operation may be changed, and at least two operations may be performed in parallel. In an example, an electronic device of FIG. 6 may correspond to the electronic device 101 of FIG. 1, FIG. 2, FIG. 3, or FIG. 4.

According to various embodiments referring to FIG. 6, the electronic device (e.g., the first protocol stack) may perform a network search based on the first subscriber identity information of the first subscriber identity module 410 in operation 601. According to an embodiment, in case that a communication service based on the first subscriber identity information is in a limited state (e.g., a limited service) or that the communication service based on the first subscriber identity information is unable to be provided (e.g., no service), the processor 400 (e.g., the first protocol stack) may determine to perform the network search based on the first subscriber identity information. The processor 400 (e.g., the first protocol stack) may control the communication circuit 430 to perform search of the frequency bands supported by the first protocol stack based on the determination to perform the network search. For example, the network search of the frequency bands may be performed based on the expiration of a timer for configuring a time point of the network search. In an example, the timer may be run (or reset) based on a determination to perform the network search.

According to various embodiments, the electronic device (e.g., the first protocol stack) may share a result of the network search based on the first subscriber identity information with another protocol stack (e.g., the second protocol stack 316) in operation 603. According to an embodiment, the processor 400 (e.g., the first protocol stack) may store a result of network search based on the first subscriber identity information in the memory 440 (e.g., a shared memory). In an example, the network search result stored in the memory 440 (e.g., a shared memory) may include identification information of a protocol stack (stack ID), a list of frequency bands supported by a protocol stack (supported band list), a list of frequency bands in which signals (or energy) have been detected through network search (scan band list), and information associated with the frequency bands in which signals (or energy) have been detected through network search (available PLMN list), as shown in Table 1 below.

**[Table 1]**

| | |
|---|---|
| stack ID | 1 |

| supported band list | |
|---|---|
| NR | N77, N48 |
| LTE | B1, B3, B8, B9, B1 1 |

| scan band result | |
|---|---|
| NR | N77, B48 |
| LTE | B3, B9 |

| available PLMN list | |
|---|---|
| 1 | 310210, Rxlevel=0x52, Ratmode = LTE MODE, BAND=3 |
| 2 | 310210, Rxlevel=0x57, Ratmode = NR MODE, BAND=77 |
| 3 | 45008f, Rxlevel=0x20, Ratmode = NR MODE, BAND=48 |
| 4 | 45006f, Rxlevel=0x16, Ratmode = LTE MODE, BAND=9 |

According to an embodiment, the processor 400 (e.g., the first protocol stack) may transmit a result of network search based on the first subscriber identity information to the second protocol stack. For example, the network search result may be included in indication information associated with the network search and transmitted to the second protocol stack. In an example, the result of the network search based on the first subscriber identity information may indicate the result of the network search performed by the first protocol stack based on the first subscriber identity information (e.g., the network search result of the first protocol stack).

According to various embodiments, the electronic device (e.g., the second protocol stack) may configure a network search range and/or search priority based on the second subscriber identity information, based on the result of the network search based on the first subscriber identity information, in operation 605. According to an embodiment, the processor 400 (e.g., the second protocol stack) may determine that the network search of the first protocol stack has been completed (or ended) in case that the indication information associated with a network search is received from the first protocol stack.

According to an embodiment, in case that the indication information associated with a network search is received, the processor 400 (e.g., the second protocol stack) may configure (or update) a range of network search associated with the second subscriber identity information by removing at least one of the frequency bands supported by the second protocol stack based on the result of the network search of the first protocol stack. For example, the frequency band that is removed from the frequency bands supported by the second protocol stack may include a frequency band in which no signal (or energy) is detected through the network search of the first protocol stack, among frequency bands supported by the first protocol stack and the second protocol stack.

According to an embodiment, in case that the indication information associated with a network search is received, the processor 400 (e.g., the second protocol stack) may configure a search priority for the frequency bands supported by the second protocol stack, based on the result of the network search of the first protocol stack. For example, the processor 400 (e.g., the second protocol stack) may configure a relatively high search priority for at least one frequency band, in which a signal (or energy) has been detected via the network search of the first protocol stack, among frequency bands supported by the second protocol stack. In an example, among the frequency bands supported by the second protocol stack, the at least one frequency band in which a signal (or energy) is detected through network search of the first protocol stack may be configured to have a relatively higher search priority as a received signal strength is relatively higher.

According to various embodiments, the electronic device (e.g., the second protocol stack) may perform a network search based on the second subscriber identity information, based on a network search range and/or search priority based on the second subscriber identity information, in operation 607. According to an embodiment, the processor 400 (e.g., the second protocol stack) may control the communication circuit 430 to perform search of the at least one frequency band included in the network search range based on the second subscriber identity information. According to an embodiment, the processor 400 (e.g., the second protocol stack) may control the communication circuit 430 to perform search of the frequency bands supported by the second protocol stack based on a search priority based on the second subscriber identity information. According to an embodiment, the processor 400 (e.g., the second protocol stack) may control the communication circuit 430 to perform search of the at least one frequency band included in the network search range, based on the search priority based on the second subscriber identity information.

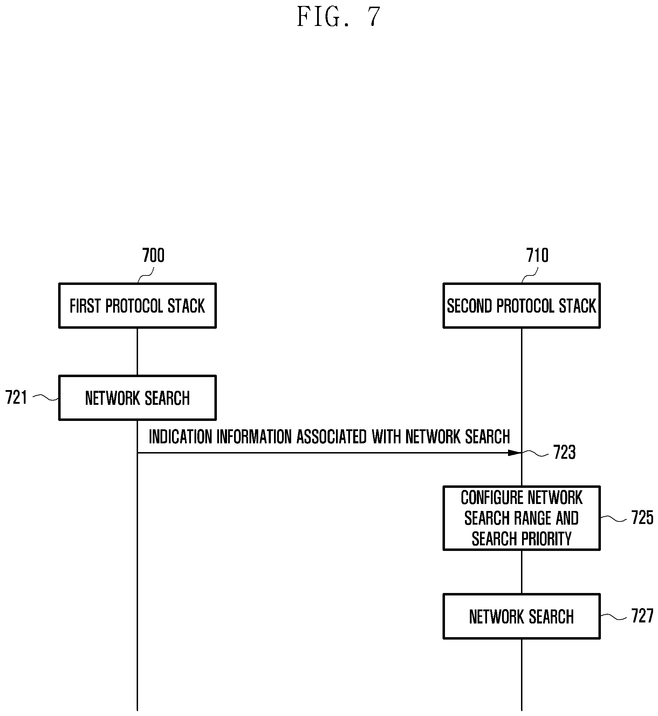

FIG. 7 illustrates an example of performing a network search for a plurality of subscriber identity modules in an electronic device according to various embodiments.

According to various embodiments referring to FIG. 7, the electronic device 101 (or the processor 400) may include a first protocol stack 700 configured to support wireless communication associated with the first subscriber identity module 410 and a second protocol stack 710 configured to support wireless communication associated with the second subscriber identity module 420.

According to various embodiments, the first protocol stack 700 may control the communication circuit 430 to perform a network search associated with the first subscriber identity module 410 (operation 721). According to an embodiment, the first protocol stack 700 may control the communication circuit 430 to perform search of frequency bands supported by the first protocol stack 700 in case that a communication service based on the first subscriber identity information is in a limited state or that the communication service based on the first subscriber identity information is unable to be provided.

According to various embodiments, when a network search associated with the first subscriber identity module 410 is complete (or ended) (operation 721), the first protocol stack 700 may transmit indication information associated with a network search to the second protocol stack 710 (operation 723). According to an embodiment, the first protocol stack 700 may store a result of the network search associated with the first subscriber identity module 410 in the memory 440 (e.g., a shared memory). The first protocol stack 700 may transmit indication information associated with a network search to the second protocol stack 710 to perform a network search of the second protocol stack 710. According to an embodiment, the first protocol stack 700 may transmit, to the second protocol stack 710, indication information associated with a network search, the indication information including a result of the network search associated with the first subscriber identity module 410.

According to various embodiments, in a case of receiving the indication information associated with a network search, the second protocol stack 710 may configure a range and/or search priority of network search associated with the second subscriber identity module 420, based on a result of the network search associated with the first subscriber identity module 410 (operation 725). According to an embodiment, in case that the second protocol stack 710 has received the indication information associated with a network search from the first protocol stack 700, the second protocol stack 710 may determine that the network search of the first protocol stack 700 is completed (or ended). The second protocol stack 710 may identify a result of the network search associated with the first subscriber identity module 410. For example, the result of the network search associated with the first subscriber identity module 410 may be obtained from the memory 440 (e.g., a shared memory). For example, a result of the network search associated with the first subscriber identity module 410 may be obtained through indication information associated with the network search. According to an embodiment, the second protocol stack 710 may configure (or update) a range of network search associated with the second subscriber identity information by removing at least one of the frequency bands supported by the second protocol stack 710 based on a result of the network search associated with the first subscriber identity module 410. According to an embodiment, the second protocol stack 710 may configure a search priority for the frequency bands supported by the second protocol stack 710 based on a result of the network search associated with the first subscriber identity module 410.

According to various embodiments, the second protocol stack 710 may control the communication circuit 430 to perform a network search associated with the second subscriber identity module 420 based on a range and/or search priority of the network search associated with the second subscriber identity module 420 (operation 727).

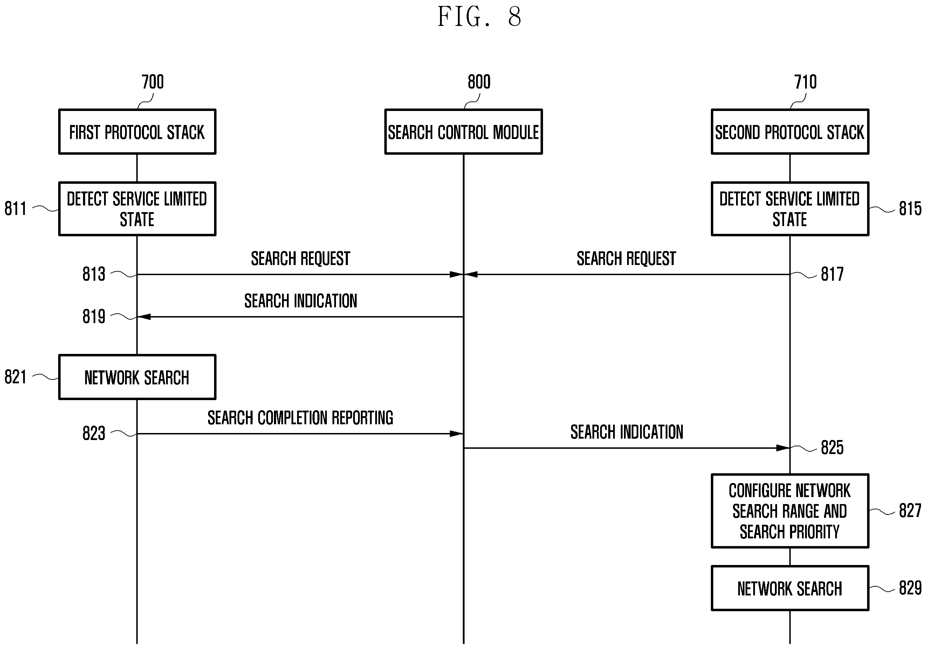

FIG. 8 illustrates an example of performing a network search for a plurality of subscriber identity modules in a service limited state in an electronic device according to various embodiments.

According to various embodiments referring to FIG. 8, the electronic device 101 (or the processor 400) may include a first protocol stack 700 configured to support wireless communication associated with the first subscriber identity module 410, a second protocol stack 710 configured to support wireless communication associated with the second subscriber identity module 420, and a search control module 800 configured to control network search of the electronic device 101.

According to various embodiments, the first protocol stack 700 may detect that a communication service based on first subscriber identity information is in a limited state or that the communication service based on the first subscriber identity information is unable to be provided. (operation 811). In case that a communication service based on the first subscriber identity information is in a limited state or that the communication service based on the first subscriber identity information is unable to be provided (operation 811), the first protocol stack 700 may transmit a request signal associated with a network search to the search control module 800 (operation 813).

According to various embodiments, the second protocol stack 710 may detect that a communication service based on second subscriber identity information is in a limited state or that the communication service based on the second subscriber identity information is unable to be provided (operation 815). In case that a communication service based on the second subscriber identity information is in a limited state or that the communication service based on the second subscriber identity information is unable to be provided (operation 815), the second protocol stack 710 may transmit a request signal associated with a network search to the search control module 800 (operation 817).

According to various embodiments, in a case of receiving the request signal associated with a network search from the first protocol stack 700 (operation 813), the search control module 800 may run a first timer for identifying a time point of the network search of the first protocol stack 700. In a case of receiving a request signal associated with a network search from the second protocol stack 710 (operation 817), the search control module 800 may run a second timer for identifying a time point of the network search of the second protocol stack 710.

According to various embodiments, in a case of receiving a request signal associated with a network search from the second protocol stack 710 while the first timer is running (operation 817), the search control module 800 may select a protocol stack for preferentially performing the network search among the first protocol stack 700 and the second protocol stack 710. According to an embodiment, the search control module 800 may select a protocol stack to preferentially perform a network search based on at least one of a dedicated data slot, a priority of a communication network (radio access technology (RAT)) supported by a protocol stack, the number of frequency bands supported by a protocol stack, or a time point at which the network search is determined to be performed.

According to an embodiment, in case that the first protocol stack 700 determines to preferentially perform a network search, the search control module 800 may transmit indication information associated with a network search to the first protocol stack 700 based on the expiration of the first timer (operation 819).

According to various embodiments, in a case of receiving the indication information associated with a network search from the search control module 800, the first protocol stack 700 may control the communication circuit 430 to perform a network search associated with the first subscriber identity module 410 (operation 821). In an example, the network search associated with the first subscriber identity module 410 may include a series of operation of identifying whether a signal (or energy) is detected through each of the frequency bands supported by the first protocol stack 700. When the network search associated with the first subscriber identity module 410 is completed (or ended) (operation 821), the first protocol stack 700 may transmit a completion report associated with the network search to the search control module 800 (operation 823).

According to an embodiment, the first protocol stack 700 may store a result of the network search associated with the first subscriber identity module 410 in the memory 440 (e.g., a shared memory). According to an embodiment, the first protocol stack 700 may transmit a completion report associated with the network search, the report including a result of the network search associated with the first subscriber identity module 410, to the search control module 800.

According to various embodiments, the search control module 800 may transmit indication information associated with a network search to the second protocol stack 710 based on the completion report associated with the network search received from the first protocol stack 700 (operation 825). According to an embodiment, the search control module 800 may transmit the indication information associated with the network search to the second protocol stack 710 based on the reception of the completion report associated with the network search from the first protocol stack 700 regardless of whether the second timer has expired (operation 825). According to an embodiment, the search control module 800 may identify whether the second timer expires upon reception of the completion report associated with the network search from the first protocol stack 700 (operation 823). In case that the second timer has expired, the search control module 800 may transmit indication information associated with a network search to the second protocol stack 710 (operation 825).

According to various embodiments, upon receiving the indication information associated with a network search from the search control module 800 (operation 825), the second protocol stack 710 may configure a range and/or search priority of network search associated with the second subscriber identity module 420, based on a result of network search associated with the first subscriber identity module 410 (operation 827). According to an embodiment, the second protocol stack 710 may configure (update) a range of network search associated with the second subscriber identity information by removing at least one frequency band among frequency bands supported by the second protocol stack 710, based on a result of network search associated with the first subscriber identity module 410. According to an embodiment, the second protocol stack 710 may configure a search priority for the frequency bands supported by the second protocol stack 710 based on a result of the network search associated with the first subscriber identity module 410. In an example, the result of the network search associated with the first subscriber identity module 410 may be obtained from the memory 440 (e.g., a shared memory) or through indication information associated with the network search.

According to various embodiments, the second protocol stack 710 may control the communication circuit 430 to perform a network search associated with the second subscriber identity module 420 based on a range and/or search priority of the network search associated with the second subscriber identity module 420 (operation 829).

According to various embodiments, in case that the second protocol stack 710 determines to perform a network search, the search control module 800 may transmit indication information associated with a network search to the second protocol stack 710 based on the expiration of the second timer. In this case, the search control module 800 may transmit the indication information associated with a network search to the first protocol stack 700 based on reception of a completion report associated with the network search from the second protocol stack 710.

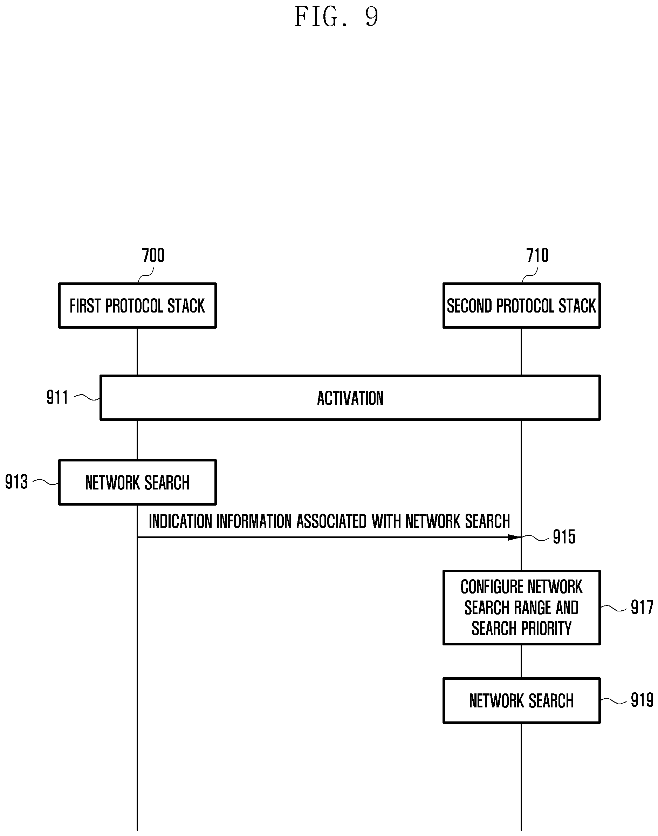

FIG. 9 illustrates an example of performing a network search for a plurality of active subscriber identity modules in an electronic device according to various embodiments.

According to various embodiments referring to FIG. 9, the first protocol stack 700 and the second protocol stack 710 may be determined to perform a network search for initial network registration (or access) based on activation (e.g., power on) of the electronic device 101 (operation 911). According to an embodiment, the first protocol stack 700 and the second protocol stack 710 may determine a protocol stack to preferentially perform a network search. According to an embodiment, the protocol stack for preferentially performing a network search may be selected based on at least one of a dedicated data slot, a priority of a communication network (radio access technology (RAT)) supported by the protocol stack, the number of frequency bands supported by the protocol stack, or a time point at which the network search is determined to be performed.

According to various embodiments, in case that the first protocol stack is determined to preferentially perform a network search, the first protocol stack 700 may control the communication circuit 430 to perform a network search associated with the first subscriber identity module 410 (operation 913).

According to various embodiments, when the network search associated with the first subscriber identity module 410 is completed (or ended) (operation 913), the first protocol stack 700 may transmit indication information associated with a network search to the second protocol stack 710 (operation 915). According to an embodiment, the first protocol stack 700 may store a result of the network search associated with the first subscriber identity module 410 in the memory 440 (e.g., a shared memory). According to an embodiment, the first protocol stack 700 may transmit the indication information associated with the network search, the indication information including a result of the network search associated with the first subscriber identity module 410, to the second protocol stack 710.

According to various embodiments, upon receiving the indication information associated with a network search, the second protocol stack 710 may configure a range and search priority of the network search associated with the second subscriber identity module 420, based on a result of the network search associated with the first subscriber identity module 410 (operation 917). According to an embodiment, the second protocol stack 710 may identify a result of the network search associated with the first subscriber identity module 410 upon receiving indication information associated with the network search from the first protocol stack 700. For example, the result of the network search associated with the first subscriber identity module 410 may be obtained from the memory 440 (e.g., a shared memory). For example, the result of the network search associated with the first subscriber identity module 410 may be obtained from the indication information associated with the network search.

According to an embodiment, the second protocol stack 710 may configure (or update) a range of network search associated with the second subscriber identity information by removing at least one of the frequency bands supported by the second protocol stack 710, based on a result of the network search associated with the first subscriber identity module 410.

According to an embodiment, the second protocol stack 710 may configure a search priority for the frequency bands supported by the second protocol stack 710 based on a result of the network search associated with the first subscriber identity module 410.

According to various embodiments, the second protocol stack 710 may control the communication circuit 430 to perform a network search associated with the second subscriber identity module 420 based on a range and/or search priority of the network search associated with the second subscriber identity module 420 (operation 919).

According to various embodiments, the electronic device 101 (or the processor 400) may select (or determine) a protocol stack to preferentially perform a network search via the search control module 800.

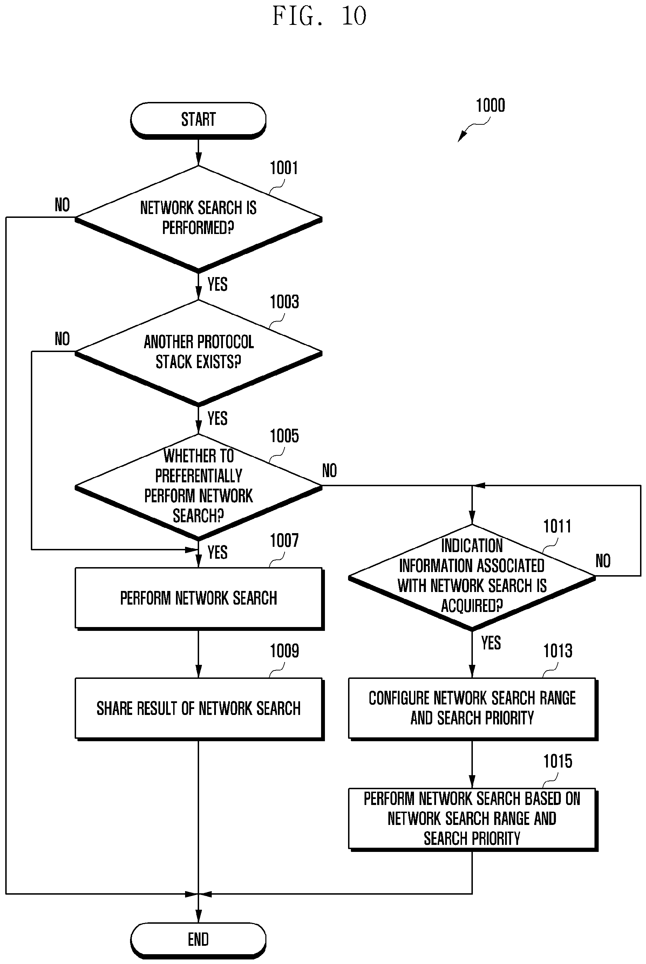

FIG. 10 is a flowchart 1000 for performing a network search based on indication information associated with a network search in an electronic device according to various embodiments. In the following embodiments, each operation may be performed sequentially, but is not required to be performed sequentially. For example, the order of each operation may be changed, and at least two operations may be performed in parallel. Although the flowchart of Fig. 10 comprises conditional branching statements such as steps 1001, 1003, 1005 or 1011, it is defined that any of the branches of the flowchart also forms a separate, additional embodiment while one or more feature(s) of such a branch may be considered optional as described below when explaining particular steps of the flowchart.

According to various embodiments referring to FIG. 10, the electronic device (e.g., the first protocol stack or second protocol stack) may determine whether to perform a network search in operation 1001. According to an embodiment, in case that a communication service based on second subscriber identity information is in a limited state or that the communication service based on the second subscriber identity information is unable to be provided, the processor 400 (e.g., the second protocol stack) may determine to perform a network search based on the second subscriber identity information. According to an embodiment, the processor 400 (e.g., the second protocol stack) may determine to perform a network search based on the second subscriber identity information when power is applied to the electronic device 101 being in an inactive state (e.g., powered off). Alternatively, step 1001 may be defined as non-branching i.e. the 'No' branch may be omitted while the step 1001 is defined as determining that the electronic device is to perform a network search.

According to various embodiments, in case that network search is determined not to be performed (e.g., "No" in operation 1001), the electronic device (e.g., the first protocol stack or second protocol stack) may end the procedure of an embodiment for performing a network search based on indication information associated with a network search.

According to various embodiments, in case that network search is determined to be performed (e.g., "Yes" in operation 1001), the electronic device (e.g., the first protocol stack or second protocol stack) may identify whether there is another protocol stack (e.g., the first protocol stack) waiting to perform the network search in operation 1003. According to an embodiment, the processor 400 (e.g., the second protocol stack) may obtain information related to the other protocol stack (e.g., the first protocol stack) waiting to perform the network search from the other protocol stack (e.g., the first protocol stack) or a separate control module (e.g., the search control module). In an example, the state of waiting to perform the network search may include a state in which a timer for the network search is running.

According to various embodiments, when it is determined that another protocol stack (e.g., the first protocol stack) that is waiting to perform the network search exists (e.g., "Yes" in operation 1003), the electronic device (e.g., the first protocol stack or second protocol stack) may determine whether to preferentially perform the network search in operation 1005. According to an embodiment, the processor 400 (e.g., the first protocol stack and/or the second protocol stack) may determine (or select) a protocol stack to preferentially perform the network search based on at least one of a dedicated data slot, a priority of a communication network (radio access technology (RAT)) supported by a protocol stack, the number of frequency bands supported by a protocol stack, or a time point at which the network search is determined to be performed. Alternatively, step 1003 may be defined as non-branching i.e. the 'No' branch may be omitted while the step 1003 is defined as determining that another protocol stack exists.

According to various embodiments, when it is determined that there is no other protocol stack (e.g., the first protocol stack) waiting to perform the network search (e.g., "No" in operation 1003), or when it is determined to preferentially perform the network search (e.g., "Yes" in operation 1005), the electronic device (e.g., the first protocol stack or the second protocol stack) may perform a network search for frequency bands supported by a protocol stack in operation 1007. According to an embodiment, the processor 400 (e.g., the second protocol stack) may control the communication circuit 430 to perform search of the frequency bands supported by the second protocol stack.

According to various embodiments, the electronic device (e.g., the first protocol stack or the second protocol stack) may share a result of the network search with the other protocol stack in operation 1009. For example, the network search result may be stored in the memory 440 (e.g., a shared memory). For example, the network search result may be transmitted to another protocol stack (e.g., the first protocol stack).

According to various embodiments, when the network search is determined not to be preferentially performed (e.g., "No" in operation 1005), the electronic device (e.g., the first protocol stack or the second protocol stack) may identify whether indication information associated with a network search is received in operation 1011. In an example, the indication information associated with a network search may be received from the first protocol stack or the search control module. Alternatively, step 1005 may be defined as non-branching i.e. the 'No' branch may be omitted while the step 1005 is defined as determining to preferentially perform the network search.

According to various embodiments, when the indication information associated with a network search is not received (e.g., "No" in operation 1011), the electronic device (e.g., the first protocol stack or the second protocol stack) may identify whether the indication information associated with a network search is received in operation 1011. According to an embodiment, the processor 400 (e.g., the second protocol stack) may identify whether the indication information associated with a network search is received regardless of whether a second timer for determining a time point of a network search of the second protocol stack has expired. In an example, the second timer may be run (or reset) at a time point at which the network search is determined to be performed. In an example, the second timer may include a timer which is the same as or different from a first timer for determining a time point of the network search of the first protocol stack. Alternatively, step 1011 may be defined as non-branching i.e. the 'No' branch may be omitted while the step 1011 is defined as acquiring indication information associated with a network search.

According to various embodiments, when the indication information associated with a network search is received (e.g., "Yes" in operation 1011), the electronic device (e.g., the first protocol stack or the second protocol stack) may configure a network search range and/or search priority based on the result of the network search of the other protocol stack in operation 1013. According to an embodiment, when the indication information associated with a network search is received from the first protocol stack, the processor 400 (e.g., the second protocol stack) may configure (or update) a range of network search associated with the second subscriber identity information by removing at least one frequency band among the frequency bands supported by the second protocol stack based on the result of the network search of the first protocol stack. For example, the frequency band that is removed from the frequency bands supported by the second protocol stack may include a frequency band, in which no signal (or energy) is detected by the network search of the first protocol stack, among the frequency bands supported by the first protocol stack and the second protocol stack.

According to an embodiment, in a case of receiving indication information associated with the network search, the processor 400 (e.g., the second protocol stack) may configure a search priority for the frequency bands supported by the second protocol stack based on the result of the network search of the first protocol stack. For example, the processor 400 (e.g., the second protocol stack) may configure a relatively high search priority for the at least one frequency band, in which a signal (or energy) has been detected via the network search of the first protocol stack among frequency bands supported by the second protocol stack. In an example, among the frequency bands supported by the second protocol stack, the at least one frequency band in which a signal (or energy) is detected via the network search of the first protocol stack may be configured to have a relatively higher search priority as the received signal strength is relatively higher.

According to various embodiments, the electronic device (e.g., the first protocol stack or the second protocol stack) may perform a network search of a protocol stack based on the network search range and/or search priority in operation 1015. According to an embodiment, the processor 400 (e.g., the second protocol stack) may control the communication circuit 430 to perform search of at least one frequency band included in the network search range, based on a search priority based on the second subscriber identity information.

According to various embodiments, in a state of determining to perform the network search, the electronic device (e.g., the second protocol stack) may determine whether another protocol stack (e.g., the first protocol stack) exists while performing the network search. When it is determined that another protocol stack (e.g., the first protocol stack) exists while performing the network search, the electronic device (e.g., the second protocol stack) may identify whether indication information associated with the network search is received (operation 1011). In case that the indication information associated with a network search is received (e.g., "Yes" in operation 1011), the electronic device (e.g., the second protocol stack) may configure a network search range and/or search priority based on a result of the network search of the other protocol stack (operation 1013). The electronic device (e.g., the second protocol stack) may perform a network search of a protocol stack based on the network search range and/or search priority (operation 1015). In an example, in case that the electronic device (e.g., the second protocol stack) determines that another protocol stack (e.g., the first protocol stack) exists while performing the network search, operation 1005 to operation 1009 of FIG. 10 may be omitted.

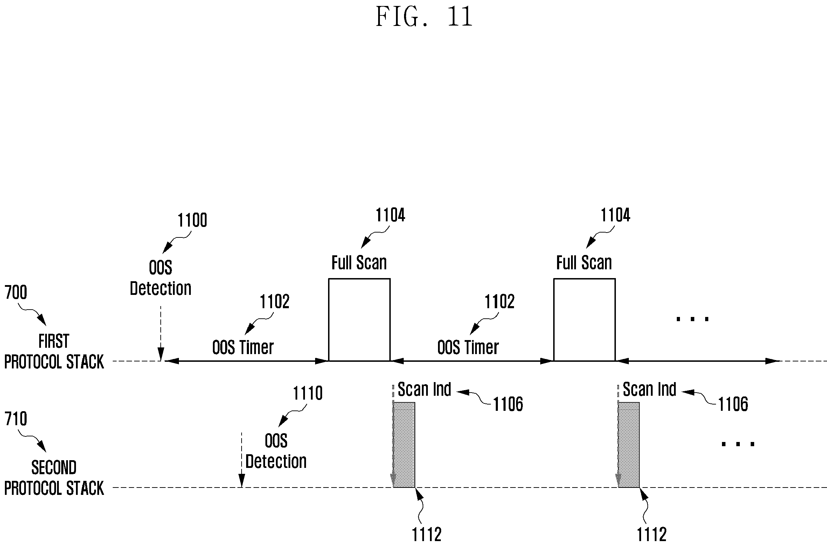

FIG. 11 illustrates an example in which a plurality of subscriber identity modules in a service limited state share a timer in an electronic device according to various embodiments. In an example, the horizontal axis of FIG. 11 may represent time information.

According to various embodiments referring to FIG. 11, the first protocol stack 700 may detect that a communication service based on first subscriber identity information is in a limited state or that the communication service based on the first subscriber identity information is unable to be provided (operation 1100). In case that a communication service based on the first subscriber identity information is in a limited state or that the communication service based on the first subscriber identity information is unable to be provided (operation 1100), the first protocol stack 700 may run a public timer 1102 to determine a time point at which a network search is performed.

According to various embodiments, the second protocol stack 710 may detect that a communication service based on second subscriber identity information is in a limited state or that the communication service based on the second subscriber identity information is unable to be provided (operation 1110). In case that the communication service based on second subscriber identity information is in a limited state or that the communication service based on the second subscriber identity information is unable to be provided (operation 1110), the second protocol stack 710 may identify whether a first protocol stack that is waiting to perform a network search exists. According to an embodiment, the second protocol stack 710 may determine that the first protocol stack that is waiting to perform the network search exists in case that a public timer is running. According to an embodiment, when it is determined that there is a first protocol stack 700 waiting to perform the network search, the second protocol stack 710 may determine whether to preferentially perform the network search. For example, the second protocol stack 710 may determine whether to preferentially perform the network search based on at least one of a dedicated data slot, a priority of a communication network (radio access network (RAT)) supported by a protocol stack, the number of frequency bands supported by a protocol stack, or a time point at which the network search is determined to be performed.

According to various embodiments, the network search of the first protocol stack 700 is determined to be preferentially performed, the second protocol stack 710 may identify whether indication information associated with the network search is received from the first protocol stack 700.

According to various embodiments, in case that the public timer 1102 expires, the first protocol stack 700 may control the communication circuit 430 to perform a network search associated with the first subscriber identity module 410 (indicated by reference numeral 1104). In an example, the network search associated with the first subscriber identity module 410 may include a series of operation of identifying whether a signal (or energy) is detected through each of the frequency bands supported by the first protocol stack 700. According to an embodiment, the first protocol stack 700 may store the result of the network search associated with the first subscriber identity module 410 in the memory 440 (e.g., a shared memory).

According to various embodiments, upon completion (or end) of the network search associated with the first subscriber identity module 410, the first protocol stack 700 may transmit indication information associated with a network search to the second protocol stack 710 (indicated by reference numeral 1106).

According to various embodiments, when it is determined, based on the result of the network search, that registration (or access) to a network (or cell) is unsuccessful, the first protocol stack 700 may reset the public timer 1102.

According to various embodiments, in case that indication information associated with the network search is received from the first protocol stack 700, the second protocol stack 710 may configure a range and/or search priority of the network search associated with the second subscriber identity module 420, based on a result of the network search associated with the first subscriber identity module 410. In an example, a result of the network search associated with the first subscriber identity module 410 may be obtained from the memory 440 (e.g., a shared memory) or through indication information associated with the network search. According to an embodiment, the second protocol stack 710 may configure (or update) a range of network search associated with the second subscriber identity information by removing at least one frequency band among frequency bands supported by the second protocol stack 710 based on a result of the network search associated with the first subscriber identity module 410. In an example, the frequency band that is removed from the frequency bands supported by the second protocol stack may include a frequency band, in which no signal (or energy) is detected through network search of the first protocol stack, among the frequency bands supported by the first protocol stack and the second protocol stack.

According to an embodiment, the second protocol stack 710 may configure a search priority of frequency bands supported by the second protocol stack 710, based on a result of network search associated with the first subscriber identity module 410. For example, the second protocol stack 710 may configure a relatively high search priority for at least one frequency band, in which a signal (or energy) has been detected via the network search of the first protocol stack, among the frequency bands supported by the second protocol stack.

According to various embodiments, the second protocol stack 710 may control the communication circuit 430 to perform the network search associated with the second subscriber identity module 420 based on a range and/or search priority of the network search associated with the second subscriber identity module 420 (indicated by reference numeral 1112). According to an embodiment, when it is determined, based on the result of the network search, that the registration (or access) to the network (or cell) is unsuccessful, the second protocol stack 710 may determine whether the first protocol stack 700 has been registered to the network (or cell). In case that the first protocol stack 700 and the second protocol stack 710 failed to register (or access) to the network (or cell), the second protocol stack 710 may identify whether the indication information associated with a network search is received from the first protocol stack 700.

According to various embodiments, the second protocol stack 710 may reset a public timer when it is determined that the network search of the second protocol stack 710 is to be preferentially performed. According to an embodiment, the second protocol stack 710 may control the communication circuit 430 to perform a network search associated with the second subscriber identity module 420 when the public timer expires. When the network search associated with the second subscriber identity module 420 is completed (or ended), the second protocol stack 710 may transmit indication information associated with a network search to the first protocol stack 700. According to an embodiment, upon receiving the indication information associated with a network search from the second protocol stack 710, the first protocol stack 700 may configure a network search range and/or search priority based on the result of network search of the second protocol stack 710. The first protocol stack 700 may perform the network search of the first protocol stack 700 based on the network search range and/or search priority.

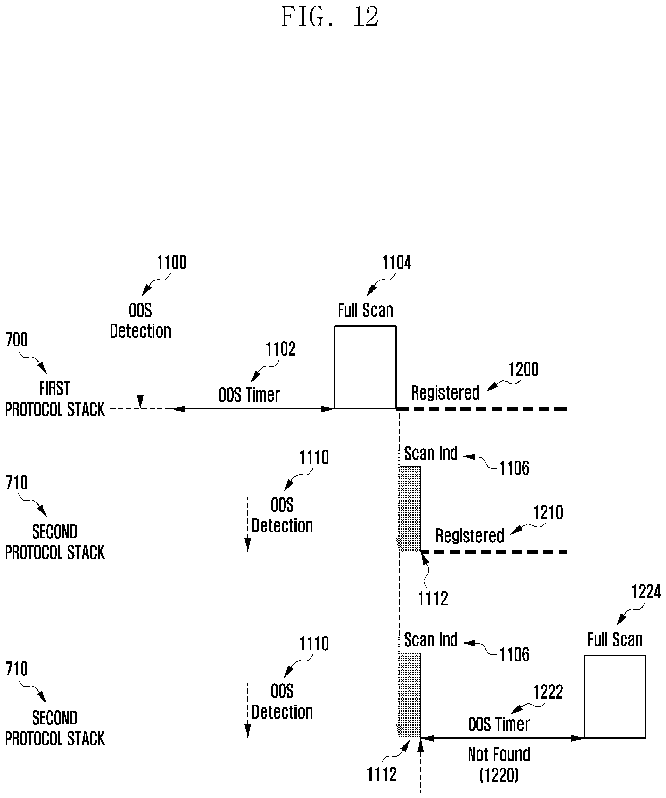

FIG. 12 illustrates an example of performing a network search for a plurality of subscriber identity modules for sharing a timer in an electronic device according to various embodiments.

According to various embodiments referring to FIG. 12, in case that a communication service based on the first subscriber identity information is in a limited state or that the communication service based on the first subscriber identity information is unable to be provided (operation 1100), the first protocol stack 700 may run a public timer 1102 to determine a time point at which a network search is performed.

According to various embodiments, in case that the communication service based on second subscriber identity information is in a limited state or that the communication service based on the second subscriber identity information is unable to be provided (operation 1110), the second protocol stack 710 may identify whether a first protocol stack that is waiting to perform a network search exists. According to an embodiment, the second protocol stack 710 may determine that the first protocol stack that is waiting to perform the network search exists in case that the public timer 1102 is running. According to an embodiment, when it is determined that there is a first protocol stack 700 waiting to perform the network search, the second protocol stack 710 may determine whether to preferentially perform the network search. According to various embodiments, the network search of the first protocol stack 700 is determined to be preferentially performed, the second protocol stack 710 may identify whether indication information associated with the network search is received from the first protocol stack 700.

According to various embodiments, in case that the public timer 1102 expires, the first protocol stack 700 may control the communication circuit 430 to perform a network search associated with the first subscriber identity module 410 (indicated by reference numeral 1104). According to various embodiments, upon completion (or end) of the network search associated with the first subscriber identity module 410, the first protocol stack 700 may transmit indication information associated with a network search to the second protocol stack 710 (indicated by reference numeral 1106).

According to various embodiments, the first protocol stack 700 may be registered (or accessed) to the network (or cell) based on the result of network search (indicated by reference numeral 1200).

According to various embodiments, in case that indication information associated with the network search is received from the first protocol stack 700, the second protocol stack 710 may configure a range and/or search priority of the network search associated with the second subscriber identity module 420, based on a result of the network search associated with the first subscriber identity module 410. The second protocol stack 710 may control the communication circuit 430 to perform the network search associated with the second subscriber identity module 420 based on a range and/or search priority of the network search associated with the second subscriber identity module 420 (indicated by reference numeral 1112).

According to various embodiments, the second protocol stack 710 may be registered (or accessed) to the network (or cell) based on the result of network search (indicated by reference numeral 1210).

According to an embodiment, when it is determined, based on the result of the network search, that the registration (or access) to the network (or cell) is unsuccessful, the second protocol stack 710 may determine whether the first protocol stack 700 has been registered to the network (or cell). According to various embodiments, in case that the first protocol stack 700 is registered (or accessed) to the network (or cell), the second protocol stack 710 may reset the public timer (indicated by reference numeral 1222).

According to an embodiment, in case that the public timer expires, the second protocol stack 710 may control the communication circuit 430 to perform a network search associated with the second subscriber identity module 420 (indicated by reference numeral 1224). In an example, the network search associated with the second subscriber identity module 420 may include a series of operation of identifying whether a signal (or energy) is detected through each of the frequency bands supported by the second protocol stack 710.

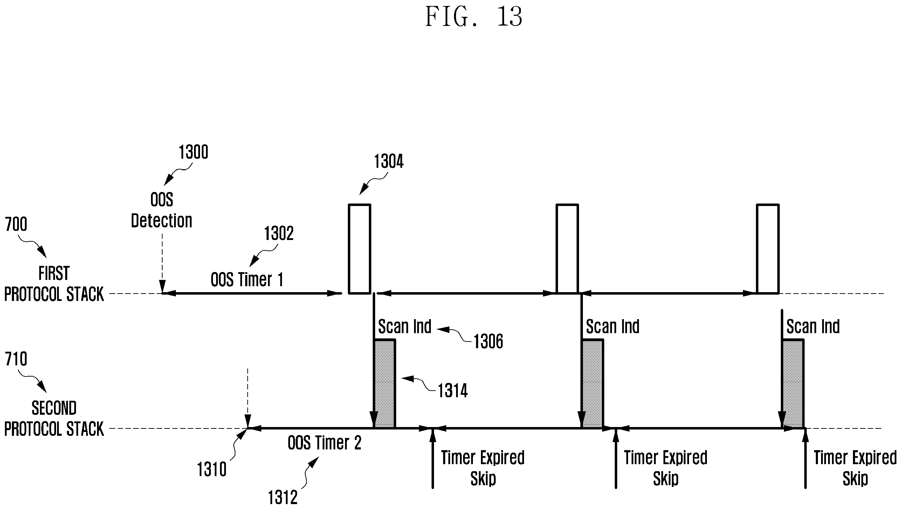

FIG. 13 illustrates an example of performing a network search based on indication information associated with a network search in an electronic device according to various embodiments.

According to various embodiments referring to FIG. 13, in case that a communication service based on the first subscriber identity information is in a limited state or that the communication service based on the first subscriber identity information is unable to be provided (operation 1300), the first protocol stack 700 may run a first timer 1302 to determine a time point at which a network search is performed.

According to various embodiments, in case that the communication service based on second subscriber identity information is in a limited state or that the communication service based on the second subscriber identity information is unable to be provided (operation 1310), the second protocol stack 710 may run a second timer 1312 for determining a time point of the network search of the second protocol stack 710.

According to various embodiments, in case that the running of the first timer 1302 expires, the first protocol stack 700 may control the communication circuit 430 to perform a network search associated with the first subscriber identity module 410 (indicated by reference numeral 1304). In an example, the network search associated with the first subscriber identity module 410 may include a series of operation of identifying whether a signal (or energy) is detected through each of the frequency bands supported by the first protocol stack 700. According to an embodiment, the first protocol stack 700 may store the result of the network search associated with the first subscriber identity module 410 in the memory 440 (e.g., a shared memory).

According to various embodiments, upon completion (or end) of the network search associated with the first subscriber identity module 410, the first protocol stack 700 may transmit indication information associated with a network search to the second protocol stack 710 (indicated by reference numeral 1306).

According to various embodiments, when it is determined, based on the result of the network search, that registration (or access) to a network (or cell) is unsuccessful, the first protocol stack 700 may reset the public timer 1302.

According to various embodiments, in case that indication information associated with the network search is received from the first protocol stack 700, the second protocol stack 710 may configure a range and/or search priority of the network search associated with the second subscriber identity module 420, based on a result of the network search associated with the first subscriber identity module 410. According to an embodiment, the second protocol stack 710 may control the communication circuit 430 to perform the network search associated with the second subscriber identity module 420 based on a range and/or search priority of the network search associated with the second subscriber identity module 420 (indicated by reference numeral 1314). In an example, the network discovery associated with the second subscriber identity module 420 may be performed based on the reception of indication information associated with the network search, regardless of a time point at which the second timer 1312 expires.

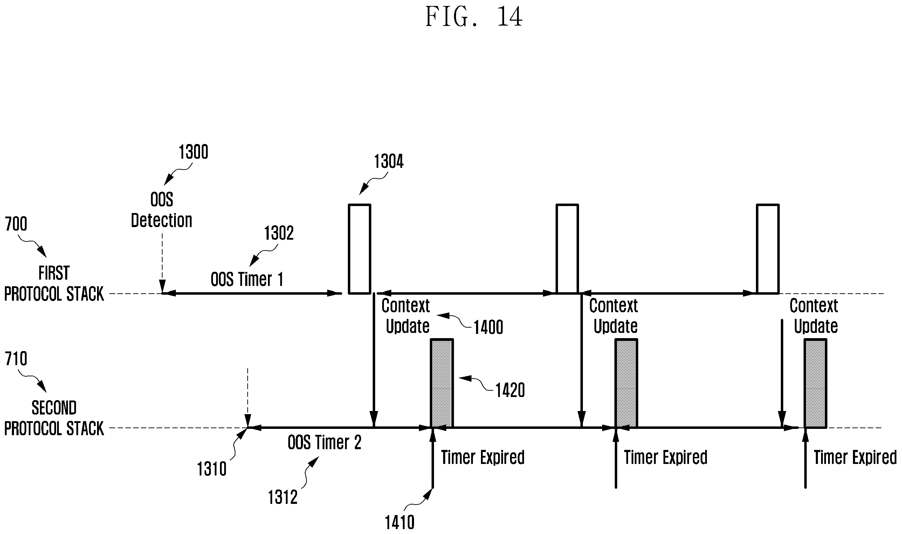

FIG. 14 illustrates an example of performing a network search based on a run time of a timer in an electronic device according to various embodiments.

According to various embodiments referring to FIG. 14, in case that a communication service based on the first subscriber identity information is in a limited state or that the communication service based on the first subscriber identity information is unable to be provided (operation 1300), the first protocol stack 700 may run a first public timer 1302 to determine a time point at which a network search is performed.

According to various embodiments, in case that the communication service based on second subscriber identity information is in a limited state or that the communication service based on the second subscriber identity information is unable to be provided (operation 1310), the second protocol stack 710 may run a second timer 1312 for determining a time point of the network search of the second protocol stack 710.

According to various embodiments, in case that the running of the first timer 1312 expires, the first protocol stack 700 may control the communication circuit 430 to perform a network search associated with the first subscriber identity module 410 (indicated by reference numeral 1304). In an example, the network search associated with the first subscriber identity module 410 may include a series of operation of identifying whether a signal (or energy) is detected through each of the frequency bands supported by the first protocol stack 700. According to an embodiment, the first protocol stack 700 may store the result of the network search associated with the first subscriber identity module 410 in the memory 440 (e.g., a shared memory) (indicated by reference numeral 1400). According to an embodiment, upon completion (or end) of the network search associated with the first subscriber identity module 410, the first protocol stack 700 may transmit indication information associated with a network search to the second protocol stack 710.

According to various embodiments, when it is determined, based on the result of the network search, that registration (or access) to a network (or cell) is unsuccessful, the first protocol stack 700 may reset the public timer 1302.

According to various embodiments, in case that indication information associated with the network search is received from the first protocol stack 700, the second protocol stack 710 may configure a range and/or search priority of the network search associated with the second subscriber identity module 420, based on a result of the network search associated with the first subscriber identity module 410.

According to various embodiment, upon expiration of the second timer 1312 (indicated by reference numeral 1410), the second protocol stack 710 may control the communication circuit 430 to perform the network search associated with the second subscriber identity module 420 based on a range and/or search priority of the network search associated with the second subscriber identity module 420 (indicated by reference numeral 1420).

According to various embodiments, a method for operating an electronic device (e.g., the electronic device 101 of FIG. 1, FIG. 2, FIG. 3, or FIG. 4) including a first subscriber identity module (e.g., the first subscriber identity module 410 of FIG. 4) configured to store first subscriber identity information and a second subscriber identity module (e.g., the second subscriber identity module 420 of FIG. 4) configured to store second subscriber identity information may include, through a first protocol stack configured to process communication with a network based on the first subscriber identity information, performing a network search based on the first subscriber identity information, storing a result of the network search based on the first subscriber identity information in a memory of the electronic device, and transmitting indication information associated with a network search to the second protocol stack. According to various embodiments, a method for operating an electronic device may include, through a second protocol stack configured to process communication with a network based on the second subscriber identity information, identifying the result of network search based on the first subscriber identity information from the memory, based on reception of the indication information associated with the network search from the first protocol stack, configuring at least one of network search range or a priority of a frequency band for performing a network search, based on the result of the network search based on the first subscriber identity information, and performing a network search based on the second subscriber identity information, based on at least one of the network search range or the priority of the frequency band.

According to various embodiments, the configuring of the network search range may include identifying a frequency band, in which no signal is detected through the network search based on the first subscriber identity information, among at least one frequency band supported by the first protocol stack and the second protocol stack, and establishing the network search range by removing the frequency band in which no signal is detected among the at least one frequency band supported by the second protocol stack.

According to various embodiments, the configuring of the priority of the frequency band may include configuring a relatively high priority for a frequency band, in which a signal has been detected through the network search based on the first subscriber identity information, among at least one frequency band supported by the second protocol stack.

According to various embodiments, the method may include, in case that the result of the network search based on the first subscriber identity information is not identified from the memory, performing a network search based on at least one frequency band supported by the second protocol stack.

According to various embodiments, the method may include, through the second protocol stack, identifying whether a timer associated with a network search is running, based on a determination that communication with a wireless network based on the second subscriber identity information is unable to be established, and in case that the timer is running, identifying whether indication information associated with the network search is received from the first protocol stack.

According to various embodiments, the method may include, through the second protocol stack, in case that the timer is running, determining whether to preferentially perform the network search of the second protocol stack, and identifying whether indication information associated with the network search is received from the first protocol stack, based on a determination to preferentially perform the network search of the first protocol stack.

According to various embodiments, the method may include, through the second protocol stack, performing a network search based on at least one frequency band supported by the second protocol stack, based on the determination to preferentially perform the network search of the second protocol stack, storing, in the memory, the result of the network search based on the second subscriber identity information, and transmitting indication information associated with a network search to the first protocol stack, and may include, through the first protocol stack, identifying, from the memory, the result of the network search based on the second subscriber identity information, based on reception of the indication information associated with the network search from the second protocol stack, configuring at least one of network search range or a priority of a frequency band for performing the network search, based on the result of the network search based on the second subscriber identity information, and performing a network search based on the first subscriber identity information based on at least one of the network search range or the priority of the frequency band.

According to various embodiments, the determining of whether to preferentially perform the network search may include determining whether to preferentially perform the network search of the second protocol stack based on at least one of a dedicated data slot, a priority of a communication network (e.g., radio access technology (RAT)) supported by a protocol stack, the number of frequency bands supported by the protocol stack, or a time point at which the network search is determined to be performed.

According to various embodiments, the method may include, through the second protocol stack, running a timer associated with a network search of the second protocol stack, based on a determination that communication with a network based on the second subscriber identity information is unable to be established, and the performing of the network search based on the second subscriber identity information may include, in case that the timer expires, performing the network search based on the second subscriber identity information based on at least one of the network search range or the priority of frequency band.

According to various embodiments, the performing of the network search based on the first subscriber identity information may include, through the first protocol stack, running a timer associated with the network search, based on a determination that communication with the network based on the first subscriber identity information is unable to be established, and in case that the timer expires, performing a network search based on at least one frequency band supported by the first protocol stack.

The embodiments of the disclosure disclosed in the specification and drawings are only presented as specific examples to easily explain the technical content according to the embodiments of the disclosure and help understanding of the embodiments of the disclosure, and are not intended to limit the scope of the embodiments of the disclosure. Accordingly, the scope of the various embodiments of the disclosure should be construed to include, in addition to the embodiments disclosed herein, all modifications or variations derived from the technical ideas of the various embodiments of the disclosure.

## Claims

1. An electronic device comprising:
a memory;
a first subscriber identity module configured to store first subscriber identity information;
a second subscriber identity module configured to store second subscriber identity information;
a communication circuit configured to perform communication with a network based on the first subscriber identity information and/or the second subscriber identity information; and
a processor operatively connected to the memory, the first subscriber identity module, the second subscriber identity module, and the communication circuit, and including a first protocol stack configured to process communication with a network based on the first subscriber identity information and a second protocol stack configured to process communication with a network based on the second subscriber identity information,
wherein the first protocol stack is configured to:
perform, through the communication circuit, a network search based on the first subscriber identity information;
store a result of the network search based on the first subscriber identity information in the memory; and
transmit indication information associated with a network search to the second protocol stack, and
wherein the second protocol stack is configured to:
identify the result of network search based on the first subscriber identity information from the memory, based on reception of the indication information associated with a network search from the first protocol stack;
configure at least one of a network search range or a priority of a frequency band for performing a network search, based on the result of the network search based on the first subscriber identity information; and
perform a network search based on the second subscriber identity information, based on at least one of the network search range or the priority of the frequency band.

2. The electronic device of claim 1, wherein the second protocol stack is configured to:
identify a frequency band in which no signal is detected through the network search based on the first subscriber identity information among at least one frequency band supported by the first protocol stack and the second protocol stack; and
establish the network search range by removing the frequency band in which no signal is detected among the at least one frequency band supported by the second protocol stack.

3. The electronic device of claim 1, wherein the second protocol stack is configured to configure a relatively high priority for a frequency band, in which a signal has been detected through the network search based on the first subscriber identity information, among at least one frequency band supported by the second protocol stack.

4. The electronic device of claim 1, wherein the second protocol stack is configured to:
identify whether a timer associated with a network search is running, based on a determination that communication with a wireless network based on the second subscriber identity information is unable to be established; and
in case that the timer is running, identify whether the indication information associated with the network search is received from the first protocol stack.

5. The electronic device of claim 4, wherein the second protocol stack is configured to:
in case that the timer is running, determine whether to preferentially perform network search of the second protocol stack; and
based on a determination to preferentially perform a network search of the first protocol stack, identify whether the indication information associated with the network search is received from the first protocol stack.

6. The electronic device of claim 5, wherein the second protocol stack is configured to:
perform a network search based on at least one frequency band supported by the second protocol stack, based on the determination to preferentially perform the network search of the second protocol stack;
store, in the memory, the result of the network search based on the second subscriber identity information; and
transmit indication information associated with a network search to the first protocol stack, and
wherein the first protocol stack is configured to:
identify, from the memory, the result of the network search based on the second subscriber identity information, based on reception of the indication information associated with a network search from the second protocol stack;
configure at least one of a network search range or a priority of a frequency band for performing the network search, based on the result of the network search based on the second subscriber identity information; and
perform a network search based on the first subscriber identity information based on at least one of the network search range or the priority of the frequency band.

7. The electronic device of claim 5, wherein the second protocol stack is configured to determine whether to preferentially perform the network search of the second protocol stack based on at least one of a dedicated data slot, a priority of a communication network (e.g., radio access technology (RAT)) supported by a protocol stack, the number of frequency bands supported by the protocol stack, or a time point at which the network search is determined to be performed.

8. The electronic device of claim 1, wherein the second protocol stack is configured to:
run a timer associated with a network search of the second protocol stack based on a determination that communication with a network based on the second subscriber identity information is unable to be established;
identify the result of the network search based on the first subscriber identity information from the memory, based on reception of indication information associated with the network search from the first protocol stack;
configure at least one of a network search range or a priority of a frequency band for performing the network search, based on the result of the network search based on the first subscriber identity information; and
in case that the timer expires, perform the network search based on the second subscriber identity information, based on at least one of the network search range or the priority of frequency band.

9. A method of operating an electronic device including a first subscriber identity module configured to store first subscriber identity information and a second subscriber identity module configured to store second subscriber identity information, the method comprising:
through a first protocol stack configured to process communication with a network based on the first subscriber identity information, performing a network search based on first subscriber identity information,
storing a result of the network search based on the first subscriber identity information in a memory of the electronic device, and
transmitting indication information associated with a network search to the second protocol stack; and
through a second protocol stack configured to process communication with a network based on the second subscriber identity information, identifying the result of network search based on the first subscriber identity information from the memory, based on reception of the indication information associated with a network search from the first protocol stack,
configuring at least one of a network search range or a priority of a frequency band for performing a network search, based on the result of the network search based on the first subscriber identity information, and
performing a network search based on the second subscriber identity information, based on at least one of the network search range or the priority of the frequency band.

10. The method of claim 9, wherein the configuring of the network search range comprises:
identifying a frequency band, in which no signal is detected through the network search based on the first subscriber identity information, among at least one frequency band supported by the first protocol stack and the second protocol stack; and
establishing the network search range by removing the frequency band in which no signal is detected among the at least one frequency band supported by the second protocol stack.

11. The method of claim 9, wherein the configuring of the priority of the frequency band comprises configuring a relatively high priority for a frequency band, in which a signal has been detected through the network search based on the first subscriber identity information, among at least one frequency band supported by the second protocol stack.

12. The method of claim 9, further comprising:
through the second protocol stack, identifying whether a timer associated with a network search is running, based on a determination that communication with a wireless network based on the second subscriber identity information is unable to be established; and
in case that the timer is running, identifying whether indication information associated with the network search is received from the first protocol stack.

13. The method of claim 12, further comprising:
through the second protocol stack, in case that the timer is running, determining whether to preferentially perform the network search of the second protocol stack; and
based on a determination to preferentially perform the network search of the first protocol stack, identifying whether indication information associated with the network search is received from the first protocol stack.

14. The method of claim 13, comprising:
through the second protocol stack, performing a network search based on at least one frequency band supported by the second protocol stack, based on the determination to preferentially perform the network search of the second protocol stack,
storing, in the memory, the result of the network search based on the second subscriber identity information, and
transmitting indication information associated with a network search to the first protocol stack; and
through the first protocol stack, identifying the result of the network search based on the second subscriber identity information from the memory, based on reception of the indication information associated with the network search from the second protocol stack,
configuring at least one of a network search range or a priority of a frequency band for performing the network search, based on the result of the network search based on the second subscriber identity information, and
performing a network search based on the first subscriber identity information based on at least one of the network search range or the priority of the frequency band.

15. The method of claim 9, further comprising, through the second protocol stack, running a timer associated with the network search of the second protocol stack, based on a determination that communication with a network based on the second subscriber identity information is unable to be established,
wherein the performing of the network search based on the second subscriber identity information comprises, in case that the timer expires, performing the network search based on the second subscriber identity information based on at least one of the network search range or the priority of frequency band.
